# EUROPEAN PATENT SPECIFICATION

(11) **EP 3 923 662 B1**
(45) Date of publication and mention of the grant of the patent: **08.03.2023**
(21) Application number: 20782120.8
(22) Date of filing: 27.03.2020
(51) Int. Cl.: H04L 1/18, H04W 72/12, H04L 5/00, H04L 1/08, H04W 4/70

(54) **METHOD AND DEVICE FOR TRANSMITTING/RECEIVING WIRELESS SIGNAL IN WIRELESS COMMUNICATION SYSTEM**
VERFAHREN UND VORRICHTUNG ZUM SENDEN/EMPFANGEN EINES DRAHTLOSSIGNALS IN EINEM DRAHTLOSKOMMUNIKATIONSSYSTEM
PROCÉDÉ ET DISPOSITIF PERMETTANT DE TRANSMETTRE/RECEVOIR UN SIGNAL SANS FIL DANS UN SYSTÈME DE COMMUNICATION SANS FIL

(30) Priority: 29.03.2019 KR 20190036996; 16.08.2019 KR 20190100638; 04.10.2019 KR 20190123011; 07.11.2019 US 201962931816 P
(43) Date of publication of application: 15.12.2021
(73) Proprietor: LG Electronics Inc., SEOUL 07336 (KR)
(72) Inventor: HWANG, Seunggye, Seoul 06772 (KR); PARK, Changhwan, Seoul 06772 (KR); AHN, Joonkui, Seoul 06772 (KR); KIM, Jaehyung, Seoul 06772 (KR)
(74) Representative: Maikowski & Ninnemann Patentanwälte Partnerschaft mbB
(86) International application number: PCT/KR2020/004229
(87) International publication number: WO 2020/204496

(56) References cited:
- US-A1- 2017 273 056
- QUALCOMM INCORPORATED: "Scheduling of multiple DL/UL transport blocks", 3GPP DRAFT; R1-1902376, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Athens, Greece; 20190225 - 20190301 16 February 2019 (2019-02-16), XP051600072, Retrieved from the Internet: URL:http://www.3gpp.org/ftp/tsg%5Fran/WG1% 5FRL1/TSGR1%5F96/Docs/R1%2D1902376%2Ezip [retrieved on 2019-02-16]
- Qualcomm Incorporated: "Scheduling of multiple DL/UL transport blocks", R1- 1902368, 3GPP TSG RAN WG1 Meeting #96, 16 February 2019 (2019-02-16), XP051600064, Athens, Greece
- SIERRA WIRELESS: "LTE-M Multiple Transport Block Grant Design Considerations", R1-1901630, 3GPP TSG RAN WG1 Meeting #96, 15 February 2019 (2019-02-15), XP051599327, Athens, Greece
- HUAWEI: "Scheduling of multiple transport blocks", R1-1901510, 3GPP TSG RAN WG1 Meeting #96, 16 February 2019 (2019-02-16), XP051599207, Athens, Greece
- NOKIA: "Scheduling of multiple DL/UL transport blocks", R1-1901955, 3GPP TSG RAN WG1 Meeting #96, 15 February 2019 (2019-02-15), XP051599648, Athens, Greece

## Description

### Technical Field

The present disclosure relates to a wireless communication system, and more particularly, to a method and apparatus for transmitting and receiving a wireless signal in a wireless communication system.

### Background Art

Wireless communication systems are widely developed to provide various kinds of communication services including audio communications, data communications and the like. Generally, a wireless communication system is a kind of a multiple access system capable of supporting communications with multiple users by sharing available system resources (e.g., bandwidth, transmission power, etc.). For instance, multiple access systems include CDMA (code division multiple access) system, FDMA (frequency division multiple access) system, TDMA (time division multiple access) system, OFDMA (orthogonal frequency division multiple access) system, SC-FDMA (single carrier frequency division multiple access) system and the like.
The following prior art documents describe scheduling of multiple DL/UL transport blocks:
- Qualcomm Incorporated: "Scheduling of multiple DL/UL transport blocks", R1-1902376, 3GPP TSG RAN WG1 Meeting #96, Athens, Greece; February 25th to March 1st, 2019.
- Qualcomm Incorporated: "Scheduling of multiple DL/UL transport blocks", R1-1902368, 3GPP TSG RAN WG1 Meeting #96, Athens, Greece; February 25th to March 1st, 2019.
They both disclose jointly encoding DCI fields to save bits.

### Disclosure

### Technical Problem

An aspect of the present disclosure is to provide a method and apparatus for efficiently transmitting and receiving a wireless signal in a wireless communication system.

It will be appreciated by persons skilled in the art that the objects that could be achieved with the present disclosure are not limited to what has been particularly described hereinabove and the above and other objects that the present disclosure could achieve will be more clearly understood from the following detailed description.

### Technical Solution

The objects of the present invention are solved by the features of the independent claim. Exemplary embodiments are defined in the dependent claims. Any "aspect", "example" and "embodiment" of the description not falling within the scope of the claims does not form part of the invention and is provided for better understanding the present invention.

According to one aspect of the present disclosure, a method of receiving a signal by a user equipment, UE, in a wireless communication system according to claim 1 is provided.

According to another aspect of the present disclosure, an apparatus for wireless communication according to claim 6 is provided.

According to another aspect of the present disclosure, a method of transmitting a signal by a base station, BS, in a wireless communication system according to claim 10 is provided.

According to another aspect of the present disclosure, a base station, BS, according to claim 11 is provided.

According to another aspect of the present disclosure, a medium readable by a processor and having recorded thereon instructions that cause the processor to perform the method of claim 1 is provided.

### Advantageous Effects

According to various embodiments of the present disclosure, a wireless signal may be efficiently transmitted and received in a wireless communication system.

According to various embodiments of the present disclosure, the number of bits used to indicate redundancy version (RV) information and frequency hopping (FH) information in downlink control information (DCI) may be determined adaptively according to the number of scheduled transport blocks (TBs) in a wireless communication system supporting multi-TB scheduling.

According to various embodiments of the present disclosure, the total number of bits in DCI may be effectively reduced in a wireless communication system supporting multi-TB scheduling.

According to various embodiments of the present disclosure, network overhead caused by DCI transmission may be reduced by effectively reducing the total number of bits in DCI in a wireless communication system supporting multi-TB scheduling.

It will be appreciated by persons skilled in the art that the effects that can be achieved with the present disclosure are not limited to what has been particularly described hereinabove and other advantages of the present disclosure will be more clearly understood from the following detailed description taken in conjunction with the accompanying drawings.

### Brief Description of the Drawings

The accompanying drawings, which are included to provide a further understanding of the disclosure and are incorporated in and constitute a part of this application, illustrate embodiments of the disclosure and together with the description serve to explain the principle of the disclosure. In the drawings:
FIG. 1 is a diagram illustrating a radio frame structure in new RAT (NR);
FIG. 2 is a diagram illustrating a slot structure of an NR frame;
FIG. 3 is a diagram illustrating a self-contained slot structure;
FIG. 4 is a diagram illustrating machine type communication (MTC);
FIG. 5 is a diagram illustrating physical channels and a general signal transmission using the physical channels in MTC;
FIG. 6 is a diagram illustrating cell coverage enhancement in MTC;
FIG. 7 is a diagram illustrating MTC signal bands;
FIG. 8 is a diagram illustrating scheduling in legacy long term evolution (LTE) and MTC;
FIG. 9 is a flowchart illustrating an operation of a base station (BS) supporting multi-transport block (TB) scheduling;
FIG. 10 is a flowchart illustrating an operation of a user equipment (UE) for which multi-TB scheduling is supported;
FIG. 11 is a diagram illustrating a signal flow for a data transmission and reception process between a BS supporting multi-TB scheduling and a UE according to an embodiment;
FIG. 12 is a flowchart illustrating an operation of a UE according to an embodiment of the present disclosure;
FIG. 13 is a diagram illustrating a signal flow for an initial network access and subsequent communication process;
FIG. 14 is a diagram illustrating a communication system applied to the present disclosure;
FIG. 15 is a block diagram illustrating an example of wireless devices applied to the present disclosure;
FIG. 16 is a block diagram illustrating another example of wireless devices applied to the present disclosure;
FIG. 17 is a block diagram illustrating a portable device applied to the present disclosure; and
FIG. 18 is a block diagram illustrating a vehicle or an autonomous driving vehicle applied to the present disclosure.

### Best Mode

The technology described herein is applicable to various wireless access systems such as code division multiple access (CDMA), frequency division multiple access (FDMA), time division multiple access (TDMA), orthogonal frequency division multiple access (OFDMA), single carrier frequency division multiple access (SC-FDMA), etc. The CDMA may be implemented as radio technology such as universal terrestrial radio access (UTRA) or CDMA2000. The TDMA may be implemented as radio technology such as global system for mobile communications (GSM), general packet radio service (GPRS), or enhanced data rates for GSM evolution (EDGE). The OFDMA may be implemented as radio technology such as the Institute of Electrical and Electronics Engineers (IEEE) 802.11 (Wi-Fi), IEEE 802.16 (WiMAX), IEEE 802-20, evolved UTRA (E-UTRA), etc. The UTRA is a part of a universal mobile telecommunication system (UMTS). The 3rd generation partnership project (3GPP) long term evolution (LTE) is a part of an evolved UMTS (E-UMTS) using the E-UTRA. LTE-advance (LTE-A) or LTE-A pro is an evolved version of the 3GPP LTE. 3GPP new radio or new radio access technology (3GPP NR) is an evolved version of the 3GPP LTE, LTE-A, or LTE-A pro.

Although the present disclosure is described based on 3GPP communication systems (e.g., LTE-A, NR, etc.) for clarity of description, the spirit of the present disclosure is not limited thereto. The LTE refers to the technology beyond 3GPP technical specification (TS) 36.xxx Release 8. In particular, the LTE technology beyond 3GPP TS 36.xxx Release 10 is referred to as the LTE-A, and the LTE technology beyond 3GPP TS 36.xxx Release 13 is referred to as the LTE-A pro. The 3GPP NR refers to the technology beyond 3GPP TS 38.xxx Release 15. The LTE/NR may be called `3GPP system'. Herein, "xxx" refers to a standard specification number. The LTE/NR may be commonly referred to as `3GPP system'. Details of the background, terminology, abbreviations, etc. used herein may be found in documents published before the present disclosure. For example, the following documents may be referenced.

### 3GPP LTE

- 36.211: Physical channels and modulation
- 36.212: Multiplexing and channel coding
- 36.213: Physical layer procedures
- 36.300: Overall description
- 36.331: Radio Resource Control (RRC)

### 3GPP NR

- 38.211: Physical channels and modulation
- 38.212: Multiplexing and channel coding
- 38.213: Physical layer procedures for control
- 38.214: Physical layer procedures for data
- 38.300: NR and NG-RAN Overall Description
- 38.331: Radio Resource Control (RRC) protocol specification

Symbols/abbreviations/terms used herein are defined as follows.
- PDCCH: Physical downlink control channel. The PDCCH is a communication channel in the physical layer, for providing DCI. The proposed methods of the present disclosure are applicable to PDCCHs of various structures such as enhanced PDCCH (EPDCCH), MTC-PDCCH (MPDCCH), and narrowband-PDCCH (NPDCCH), even though not specified. The PDCCH is used as a term representing the PDCCHs of various structures, although not specified separately.
- PUCCH: Physical uplink control channel. The PUCCH is a communication channel in the physical layer, for providing UCI. The proposed methods of the present disclosure are applicable to PUCCHs of various structures, even though not specified. The PUCCH is used as a term representing the PUCCHs of various structures, although not specified separately.
- PDSCH: Physical downlink shared channel. The PDSCH is a communication channel in the physical layer, for providing DL data. The proposed methods of the present disclosure are applicable to PDCCHs of various structures such as narrowband-PDSCH (NPDSCH), even though not specified. The PDSCH is used as a term representing the PSCCHs of various structures, although not specified separately.
- PUSCH: Physical uplink shared channel. The PUSCH is a communication channel in the physical layer, for providing UL data. The proposed methods of the present disclosure are applicable to PUSCHs of various structures such as narrowband-PUSCH (NPUSCH), even though not specified. The PUSCH is used as a term representing the PUSCHs of various structures, although not specified separately.
- DCI: Downlink Control Information
- UCI: Uplink Control Information
- NDI: New data indicator. The NDI may be included in DCI (transmitted/received on the PDCCH) and indicates whether new data is transmitted/receives or previous data is retransmitted on a PDSCH/PUSCH scheduled by the DCI.
- CB: Code Block
- CBG: Code Block Group
- TB: Transport Block
- TBS: Transport Block Size
- MCS: Modulation and Coding Scheme
- SF: Subframe
- RE: Resource Element
- RB: Resource Block
- HARQ: Hybrid Automatic Repeat reQuest
- SIB: System Information Block
- LAA: licensed assisted access. A band defined in the LTE/LTE-A/LTE-A Pro/5G/NR system is referred to as a licensed bandwidth, and a band that is not defined in the LTE/LTE-A/LTE-A Pro/5G/NR system such as a Wi-Fi band or a Bluetooth (BT) band is referred to as an unlicensed bandwidth. An operation method in an unlicensed band is referred to as an LAA scheme.
- Scheduling delay: The interval between the last transmission position (e.g., SF or slot) of the PDCCH dynamically scheduled by DCI and the starting transmission position (e.g., SF or slot) of a scheduled TB (PUSCH or PDSCH).
- FH: Frequency hopping. An FH indicator is a DCI field indicating FH, and FH indication information is information indicating whether FH is enabled/disabled.
- RA: Resource Assignment
- RV: Redundancy Version

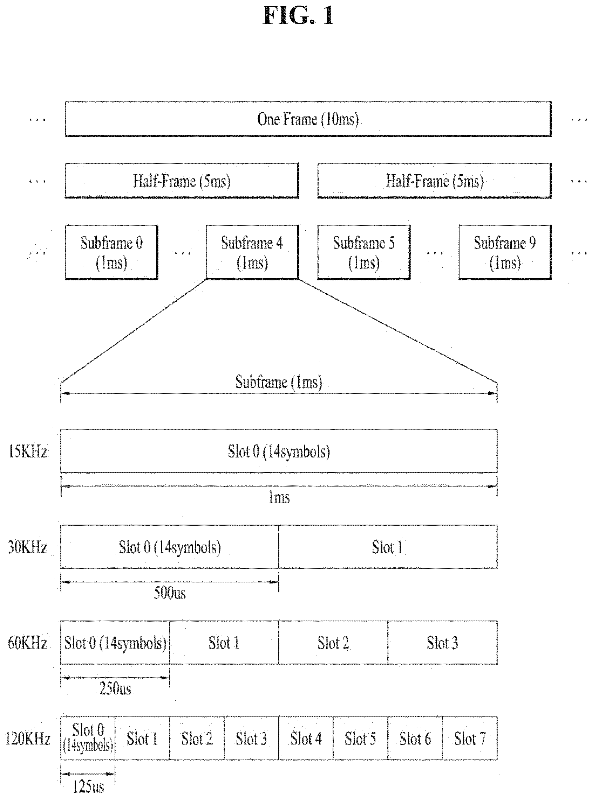

FIG. 1 is a diagram illustrating a radio frame structure in NR.

In NR, UL and DL transmissions are configured in frames. Each radio frame has a length of 10ms and is divided into two 5-ms half-frames (HFs). Each half-frame is divided into five 1-ms subframes. A subframe is divided into one or more slots, and the number of slots in a subframe depends on a subcarrier spacing (SCS). Each slot includes 12 or 14 OFDM(A) symbols according to a cyclic prefix (CP). When a normal CP is used, each slot includes 14 OFDM symbols. When an extended CP is used, each slot includes 12 OFDM symbols. A symbol may include an OFDM symbol (or a CP-OFDM symbol) and an SC-FDMA symbol (or a discrete Fourier transform-spread-OFDM (DFT-s-OFDM) symbol).

Table 1 exemplarily illustrates that the number of symbols per slot, the number of slots per frame, and the number of slots per subframe vary according to SCSs in a normal CP case.

**[Table 1]**

| SCS (15^{∗}2^u) | N^{slot}_{symb} | N^{frame, u}ₛₗₒₜ | N^{subframe,u}ₛₗₒₜ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

| | | | |
|---|---|---|---|
| ^{∗} N^{slot}_{symb}: Number of symbols in slot ^{∗} N^{frame, u}ₛₗₒₜ: Number of slots in frame ^{∗} N^{subframe,u}ₛₗₒₜ: Number of slots in subframe | | | |

Table 2 illustrates that the number of symbols per slot, the number of slots per frame, and the number of slots per subframe vary according to SCSs in an extended CP case.

**[Table 2]**

| SCS (15^{∗}2^u) | N^{slot}_{symb} | N^{frame,u}ₛₗₒₜ | N^{subframe,u}ₛₗₒₜ |
|---|---|---|---|
| 60kHz | 12 | 40 | 4 |

In the NR system, different OFDM(A) numerologies (e.g., SCSs, CP lengths, and so on) may be configured for a plurality of cells aggregated for one UE. Accordingly, the (absolute time) duration of a time resource (e.g., a subframe, a slot, or a transmission time interval (TTI)) (for convenience, referred to as a time unit (TU)) composed of the same number of symbols may be configured differently between the aggregated cells.

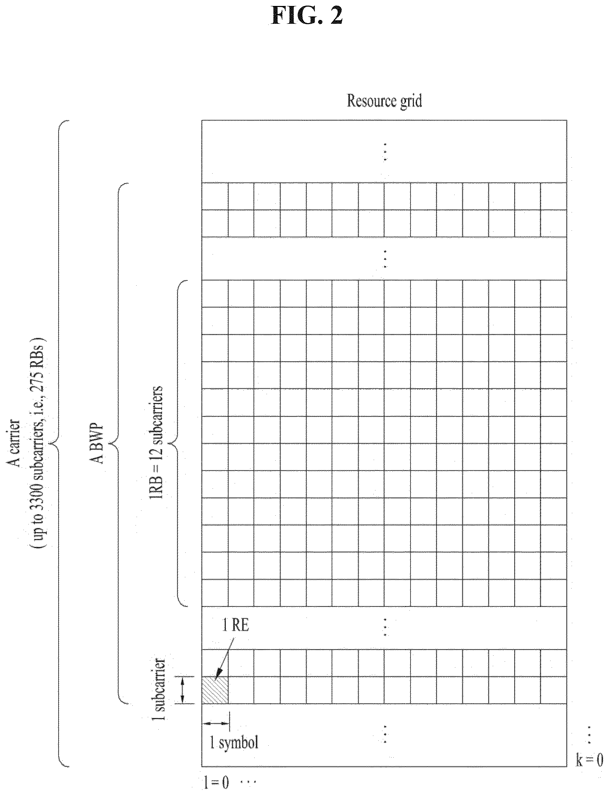

FIG. 2 is a diagram illustrating a slot structure of an NR frame.

A slot includes a plurality of symbols in the time domain. For example, one slot includes 14 symbols in a normal CP case and 12 symbols in an extended CP case. A carrier includes a plurality of subcarriers in the frequency domain. A resource block (RB) may be defined by a plurality of (e.g., 12) consecutive subcarriers in the frequency domain. A bandwidth part (BWP) may be defined by a plurality of consecutive (physical) RBs ((P)RBs) in the frequency domain and correspond to one numerology (e.g., SCS, CP length, and so on). A carrier may include up to N (e.g., 5) BWPs. Data communication may be conducted in an active BWP, and only one BWP may be activated for one UE. Each element in a resource grid may be referred to as a resource element (RE), to which one complex symbol may be mapped.

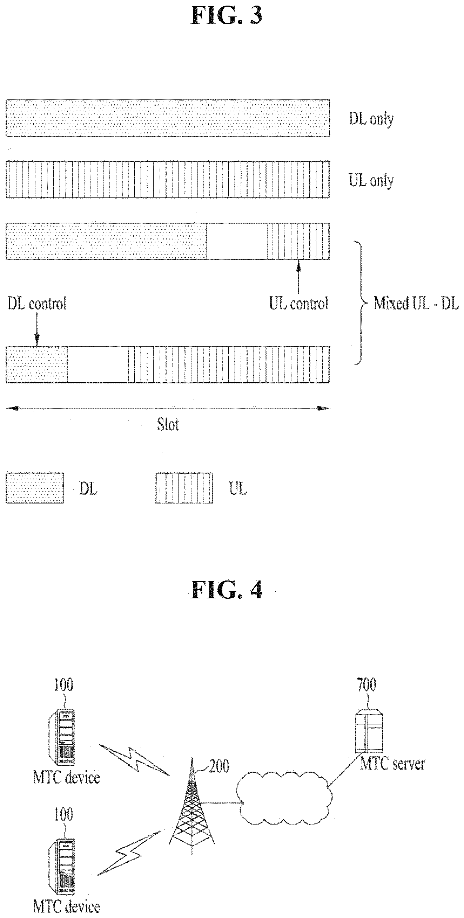

FIG. 3 illustrates an example of the structure of a self-contained slot. In an NR system, a frame is characterized by a self-contained structure in which a DL control channel, DL or UL data, a UL control channel, etc., can all be contained in one slot. For example, the first N symbols in a slot may be used to transmit a DL control channel (hereinafter referred to as a DL control area), and the last M symbols in a slot may be used to transmit UL control channels (hereinafter referred to as a UL control area). N and M may each be an integer of 0 or more.

A resource area (hereinafter referred to as a data area) between the DL control area and the UL control area may be used for DL data transmission or UL data transmission. For example, the following configuration may be implemented. Each section is listed in chronological order.
1. DL only configuration
2. UL only configuration
3. Mixed UL-DL configuration
   - DL area+Guard period (GP)+UI, control area
   - DL control area+GP+UL area
      * DL area: (i) DL data area, (ii) DL control area+DL data area
      * UL area: (i) UL data area, (ii) UL data area+UL control area

The PDCCH may be transmitted in the DL control region, and the PDSCH may be transmitted in the DL data region. Analogously, in the UL control region, the PUCCH may be transmitted, and in the UL data region, the PUSCH can be transmitted. The PDCCH may transmit Downlink Control Information (DCI), such as, for example, DL data scheduling information, UL data scheduling information, and the like. The PUCCH may transmit Uplink Control Information (UCI), such as, for example, ACK/NACK information, DL CSI information, and Scheduling Request (SR), and the like. The GP provides a time gap in the process of switching from a transmission mode to a reception mode, or switching from the reception mode to the transmission mode. A portion of symbols within a subframe can be set to GP for switching from DL to UL.

### MTC(Machine Type Communication)

MTC, which is a type of data communication involving one or more machines, may be applied to machine-to-machine (M2M) or Internet of things (IoT). A machine refers to an entity that does not require direct human manipulation or intervention. For example, machines include a smart meter equipped with a mobile communication module, a vending machine, a portable terminal having an MTC function, and so on.

The 3GPP has applied MTC since release 10, and MTC may be implemented to satisfy the requirements of low cost and low complexity, coverage enhancement, and low power consumption. For example, 3GPP Release 12 added features for low-cost MTC devices and thus defined UE category 0. A UE category is an indicator indicating the amount of data that a UE may process in a communication modem. A UE of UE category 0 may reduce baseband/radio frequency (RF) complexity by using a reduced peak data rate, a half-duplex operation with relaxed RF requirements, and a single reception (Rx) antenna. In 3GPP Release 12, enhanced MTC (eMTC) was introduced, and the price and power consumption of MTC UEs were further lowered by operating the MTC UEs only at 1.08MHz (that is, 6 RBs), a minimum frequency bandwidth supported in legacy LTE.

In the following description, the term MTC is interchangeably used with the terms eMTC, LTE-M1/M2, bandwidth reduced low complexity/coverage enhanced (BL/CE), non-BL UE (in enhanced coverage), NR MTC, and enhanced BL/CE, and other equivalent terms. An MTC UE/device covers any terminal/device with MTC functionality (e.g., a smart meter, a vending machine, and a portable terminal with an MTC function).

FIG. 4 illustrates MTC communication.

Referring to FIG. 4, an MTC device 100 is a wireless device providing MTC communication, which may be fixed or mobile. For example, the MTC device 100 includes a smart meter equipped with a mobile communication module, a vending machine, and a portable terminal having an MTC function. A BS 200 may be connected to the MTC device 100 by a wireless access technology and to an MTC server 700 through a wired network. The MTC server 700 is connected to MTC devices 100 and provides MTC services to the MTC devices 100. The MTC services are different from existing communication services that involve human intervention, and various categories of services such as tracking, metering, payment, medical service, and remote control may be provided through MTC. For example, services such as meter reading, water level measurement, use of surveillance cameras, and inventory reporting of vending machines may be provided through MTC. MTC communication has the features of a small amount of transmitted data and intermittent UL/DL data transmissions/receptions. Therefore, it is effective to lower the unit cost of MTC devices and reduce battery consumption in accordance with the low data rate. The MTC devices generally have little mobility, and accordingly, the MTC communication is conducted in a channel environment that hardly changes.

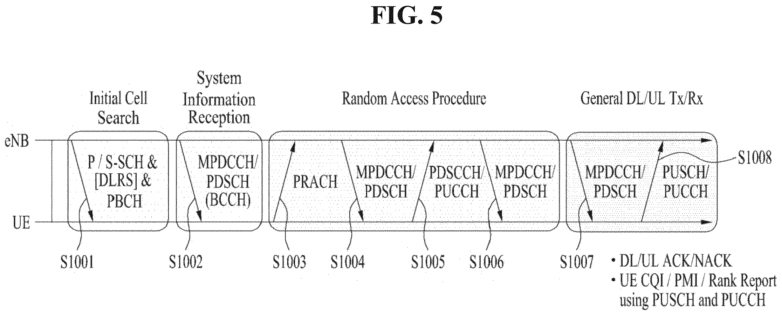

FIG. 5 illustrates physical channels and a general signal transmission using the physical channels in MTC. In a wireless communication system, an MTC UE receives information on DL from a BS and transmits information on UL to the BS. Information transmitted and received between the BS and the UE includes data and various types of control information, and various physical channels are defined according to the types/usages of information carried on the physical channels.

When a UE is powered on or enters a new cell, the UE performs initial cell search including acquisition of synchronization with a BS (S1001). For the initial cell search, the UE synchronizes its timing with the BS and acquires information such as a cell ID by receiving a primary synchronization signal (PSS) and a secondary synchronization signal (SSS) from the BS. The PSS/SSS may be the PSS/SSS of legacy LTE. The UE may then acquire information broadcast in the cell by receiving a physical broadcast channel (PBCH) from the BS (S1002). During the initial cell search, the UE may further monitor a DL channel state by receiving a downlink reference signal (DL RS).

After the initial cell search, the UE may acquire more detailed system information by receiving a MTC PDCCH (MPDCCH) and receiving a PDSCH corresponding to the MPDCCH (S1102).

Subsequently, to complete the connection to the BS, the UE may perform a random access procedure with the BS (S1003 to S1006). Specifically, the UE may transmit a preamble on a physical random access channel (PRACH) (S1003) and may receive a PDCCH and a random access response (RAR) to the preamble on a PDSCH corresponding to the PDCCH (S1004). The UE may then transmit a PUSCH by using scheduling information included in the RAR (S1005), and perform a contention resolution procedure including reception of a PDCCH and a PDSCH corresponding to the PDCCH (S1006).

After the above procedure, the UE may receive an MPDCCH signal and/or a PDSCH signal from the BS (S1107) and transmit a PUSCH signal and/or a PUCCH signal to the BS (S1108) in a general UL/DL signal transmission procedure. Control information that the UE transmits to the BS is generically called uplink control information (UCI). The UCI includes a hybrid automatic repeat request (HARQ) acknowledgment/negative acknowledgment (ACK/NACK), a scheduling request (SR), and channel state information (CSI). The CSI includes a channel quality indicator (CQI), a precoding matrix indicator (PMI), a rank indication (RI), and so on.

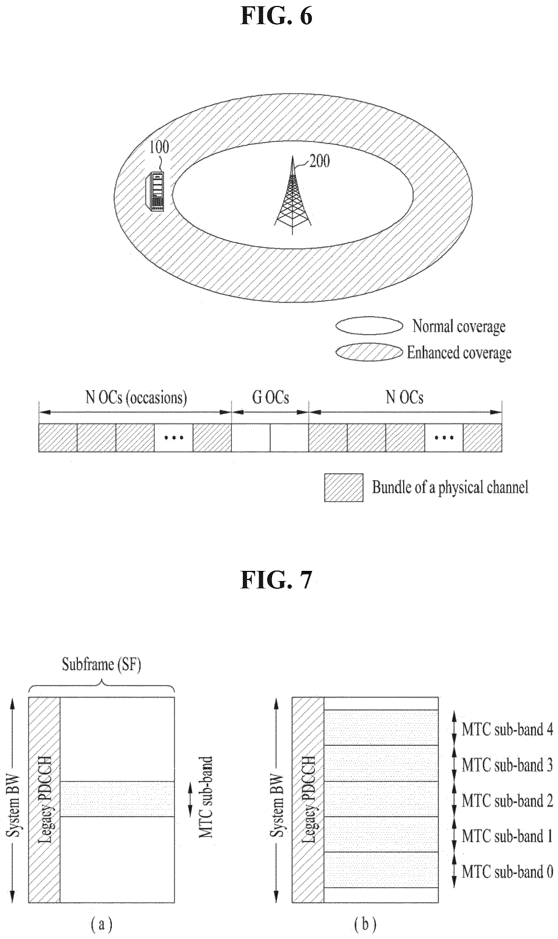

FIG. 6 illustrates cell coverage enhancement in MTC.

For cell extension or cell enhancement (CE) of a BS to the MTC device 100, various CE techniques are under discussion. For example, for CE, the BS/UE may transmit/receive one physical channel/signal in a plurality of occasions (a bundle of physical channels). The physical channel/signal may be repeatedly transmitted/received during a bundle interval according to a predefined rule. A receiver may increase the decoding success rate of the physical channel/signal by decoding the whole or part of the physical channel/signal bundle. An occasion may mean resources (e.g., time/frequency) in which a physical channel/signal may be transmitted/received. An occasion for a physical channel/signal may include a subframe, a slot, or a symbol set in the time domain. The symbol set may include one or more consecutive OFDM-based symbols. An OFDM-based symbol may include an OFDM(A) symbol and a DFT-s-OFDM(A) (i.e., SC-FDM(A)) symbol. The occasion for a physical channel/signal may include a frequency band or an RB set in the frequency domain. For example, a PBCH, a PRACH, an MPDCCH, a PDSCH, a PUCCH, and a PUSCH may be repeatedly transmitted.

FIG. 7 illustrates MTC signal bands.

Referring to FIG. 7, to reduce the unit cost of MTC UEs, MTC may be conducted only in a specific band (or channel band) (MTC subband or narrowband (NB)) of the system bandwidth of a cell, regardless of the system bandwidth of the cell. For example, an MTC UE may perform a UL/DL operation only in a 1.08-MHz frequency band. 1.08MHz corresponds to six consecutive PRBs in the LTE system, and is defined to enable MTC UEs to follow the same cell search and random access procedures as LTE UEs. FIG. 7(a) illustrates an MTC subband configured at the center of a cell (e.g., center 6 PRBs), and FIG. 7(b) illustrates a plurality of MTC subbands configured within a cell. The plurality of MTC subbands may be configured contiguously/non-contiguously in the frequency domain. Physical channels/signals for MTC may be transmitted and received in one MTC subband. In the NR system, an MTC subband may be defined in consideration of a frequency range and an SCS. In the NR system, for example, the size of an MTC subband may be defined as X consecutive PRBs (i.e., 0.18^{∗}X^{∗}(2^µ)MHz bandwidth) (see Table 4 for µ). X may be set to 20 according to the size of a synchronization signal/physical broadcast channel (SS/PBCH) block. In the NR system, MTC may operate in at least one BWP. A plurality of MTC subbands may be configured in a BWP.

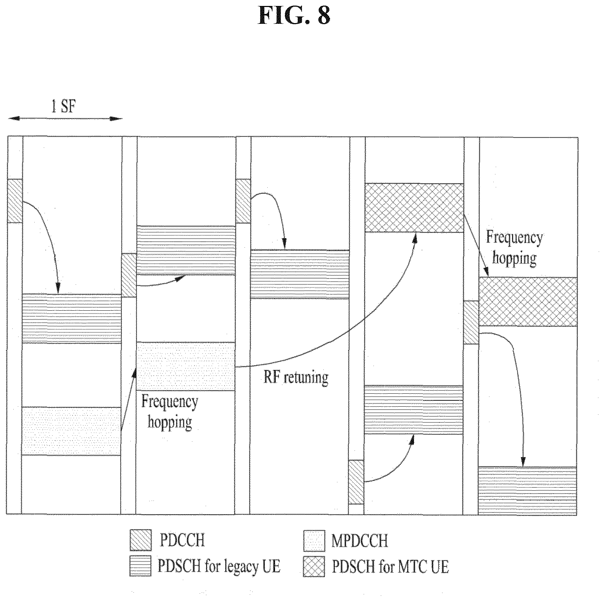

FIG. 8 illustrates scheduling in legacy LTE and MTC.

Referring to FIG. 8, a PDSCH is scheduled by a PDCCH in legacy LTE. Specifically, the PDCCH may be transmitted in the first N OFDM symbols in a subframe (N=1 to 3), and the PDSCH scheduled by the PDCCH is transmitted in the same subframe. In MTC, a PDSCH is scheduled by an MPDCCH. Accordingly, an MTC UE may monitor MPDCCH candidates in a search space within a subframe. The monitoring includes blind decoding of the MPDCCH candidates. The MPDCCH delivers DCI, and the DCI includes UL or DL scheduling information. The MPDCCH is multiplexed with the PDSCH in FDM in a subframe. The MPDCCH is repeatedly transmitted in up to 256 subframes, and the DCI carried in the MPDCCH includes information about an MPDCCH repetition number. In DL scheduling, when the repeated transmissions of the MPDCCH end in subframe #N, transmission of the PDSCH scheduled by the MPDCCH starts in subframe #N+2. The PDSCH may be repeatedly transmitted in up to 2048 subframes. The MPDCCH and the PDSCH may be transmitted in different MTC subbands. In UL scheduling, when the repeated transmissions of the MPDCCH end in subframe #N, transmission of a PUSCH scheduled by the MPDCCH starts in subframe #N+4. For example, when the PDSCH is repeatedly transmitted in 32 subframes, the PDSCH may be transmitted in the first 16 subframes in a first MTC subband, and in the remaining 16 subframes in a second MTC subband. MTC operates in a half-duplex mode. MTC HARQ retransmission is adaptive and asynchronous.

### Embodiment: DCI Fields for Multi-TB Scheduling

In communication systems such as LTE and NR, one DCI is generally used to schedule one PDSCH or PUSCH. When a plurality of TBs or HARQ processes are to be scheduled, the UE generally needs to monitor a plurality of different search spaces to obtain DCI that schedules each TB or HARQ process. However, when the size of transmission data is larger than a TBS transmittable at one time on a PDSCH/PUSCH or there is a need for periodic data transmission, continuous PDSCH/PUSCH transmissions may be required. Repeated PDCCH transmissions may increase the network overhead of the BS, and repeated PDCCH monitoring may cause power consumption in the UE. To solve these problems, a multi-TB scheduling (multiple-TB scheduling) structure for scheduling a plurality of TBs by one DCI may be considered. In the multi-TB scheduling structure, network overhead caused by repeated PDCCH transmissions may be reduced, and power consumption for detecting an additional DCI may be reduced in the UE. In LTE, a multi-SF scheduling structure for controlling a plurality of PUSCH transmissions by one DCI in LAA communication has been proposed. In this structure, the BS may schedule PUSCH transmissions corresponding to up to four HARQ processes by one DCI, and the UE may perform a plurality of PUSCH transmissions only by one PDCCH monitoring. Similarly, in the current Rel-16 NB-IoT/MTC item, a multi-TB scheduling technique for scheduling a plurality of TBs by one DCI is under discussion.

For a multi-TB scheduling method under discussion in Rel-16 MTC, a design to support up to 8 HARQ processes in CE mode A and up to 4 HARQ processes in CE mode B is considered. As the maximum number of TBs scheduled by one DCI is increased, overhead required for a DCI transmission may be reduced. However, the amount of information required for simultaneous scheduling of multiple TBs increases, thereby significantly increasing the number of required DCI bits. Particularly, considering that decoding reliability should be maintained to satisfy a target MCL in a system that should support enhanced coverage such as MTC, the number of DCI bits should be considered important in the design of DCI for multi-TB scheduling.

To solve the above problem, the present disclosure proposes methods of reducing the number of required DCI bits based on a correlation between some scheduling parameters in a DCI design process of a multi-TB scheduling method. Specifically, the present disclosure proposes a method of determining the sizes and interpretations of specific DCI fields by information included in other DCI fields, when a plurality of TBs or HARQ processes are scheduled by one DCI, and also proposes a related TB transmission/reception procedure.

As an example to which the proposed methods of the present disclosure are applied, multi-TB scheduling may be considered, in which one or more TBs are dynamically scheduled by one DCI in a communication system such as LTE and NR. A TB is a unit in which one transmission is performed, and the term TB may be replaced with another term describing a transmission unit for scheduling in an applied technology (e.g., CB, CBG, subframe, slot, symbol, RE, RB, HARQ process, or the like). Proposed methods of the present disclosure may also be applied to a multi-TB scheduling technique that controls transmission of one or more TBs by using one DCI in MTC and NB-IoT implemented in the LTE system. MTC and NB-IoT have low complexity and wide coverage requirements for UEs, and decoding reliability may be considered important to satisfy target MCL performance. Further, the proposed methods of the present disclosure may be applied to multi-subframe scheduling for scheduling one or more PUSCH transmissions by one DCI, as in LAA implemented in the LTE system. As described before, when additional information is introduced to multi-subframe scheduling DCI defined in the current LAA, the present disclosure may be applied, which is proposed to allow a new operation while the number of required DCI bits is maintained as much as possible.

Further, the same solution may be considered for an unlicensed band (U-band) technology being discussed in the NR system in view of similarity between the U-band technology of the NR system and the LAA technology of the LTE system. Specifically for the U-band technology, discussions are underway for multi-TTI scheduling or multiple-TTI scheduling in which one DCI schedules TBs in one or more slots, and a DCI design with low overhead may be sought. In addition, one of candidate technologies discussed for power saving of a UE in the NR system is multi-slot scheduling for scheduling one or more PDSCH/PUSCHs by one DCI. Methods proposed in the present disclosure may be applied for the purpose of scheduling non-consecutive TBs or HARQ process IDs. In addition to the examples of technologies, the proposed methods may be used to design a control channel carrying DCI or UCI in a general communication system, as far as the principle of the present disclosure is maintained.

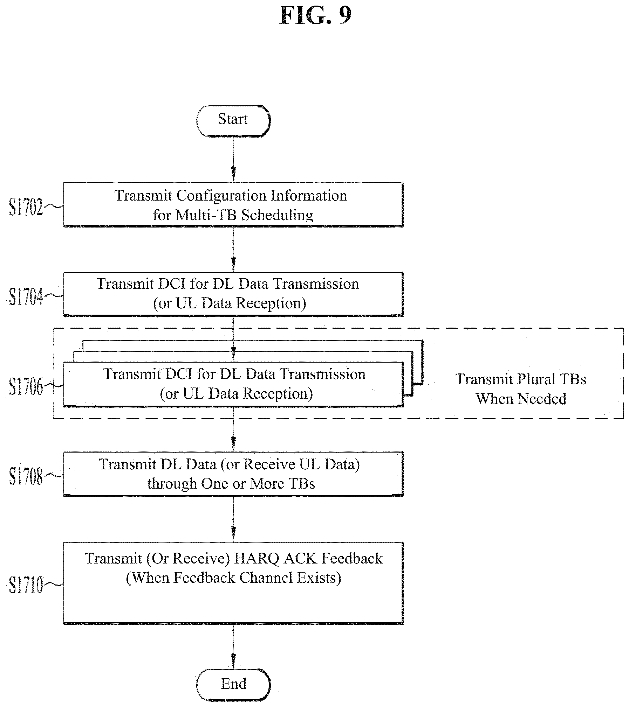

FIG. 9 is a flowchart illustrating an operation of a BS supporting multi-TB scheduling.

Referring to FIG. 9, a BS may transmit information indicating support of multi-TB scheduling and parameters related to the multi-TB scheduling to a UE. For example, the information indicating the parameters related to the multi-TB scheduling signaling may be information configured by higher-layer signaling such as an SIB or RRC signaling or information configured dynamically by DCI. Subsequently, in the presence of data to be transmitted to the UE or data to be received from the UE, the BS transmits DCI that schedules transmission/reception of a TB. In the presence of transmission data for the UE, the BS transmits one or more TBs after the DCI transmission. When there is a HARQ-ACK feedback channel, the BS performs an operation of receiving the HARQ-ACK feedback channel. In the presence of data to be received from the UE, the BS receives one or more TBs after the DCI transmission. When there is an HARQ-ACK feedback channel, the BS performs an operation of transmitting the HARQ-ACK feedback channel.

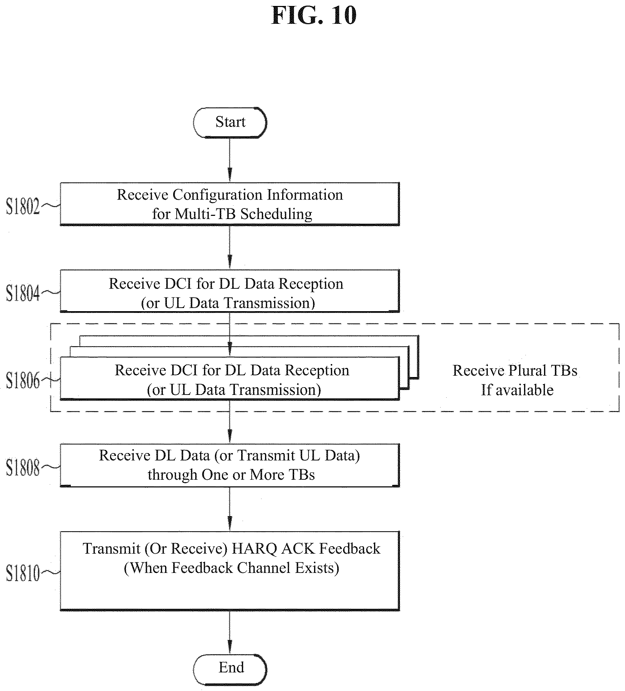

FIG. 10 is a flowchart illustrating an operation of a UE for multi-TB scheduling is supported.

Upon receipt of signaling including information indicating support of multi-TB scheduling and parameters related to the multi-TB scheduling from a BS, the UE may monitor DCI for multi-TB scheduling. Upon detection/reception of DCI including information that schedules multiple TBs, the UE identifies the transmission/reception positions of the TBs based on the signaling and scheduling information included in the DCI. In the presence of data to be received, the UE receives one or more TBs after the DCI reception. When the UE needs an HARQ-ACK feedback channel, the UE performs an operation of transmitting an HARQ-ACK feedback. In the presence of data to be transmitted, the UE transmits one or more TBS after the DCI reception. When the UE needs an HARQ-ACK feedback channel, the UE performs an operation of receiving an HARQ-ACK feedback.

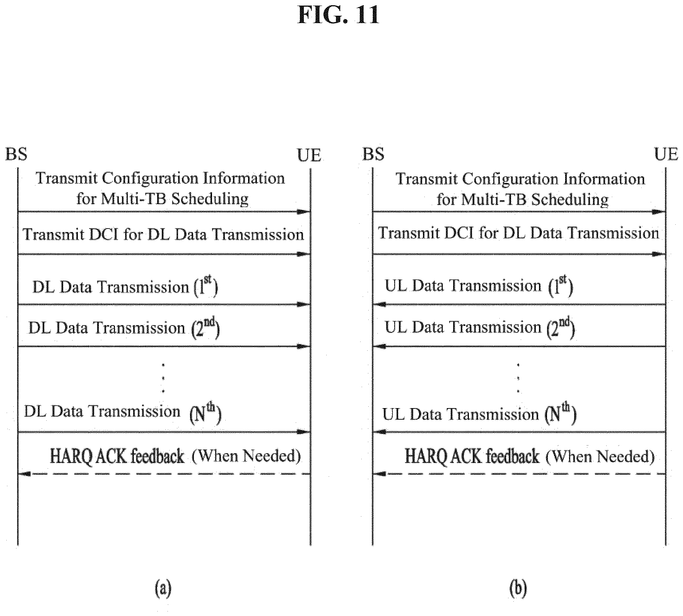

FIG. 11 is a diagram illustrating a transmission/reception process between a BS and a UE.

In the example of FIGS. 9 to 11, when the system supports MTC, DCI may be transmitted and received on an MPDCCH, UL data may be transmitted and received at least once on a PUSCH, DL data may be transmitted and received at least once on a PDSCH, and an HARQ-ACK feedback may be transmitted and received at least once on a PUCCH. In FIGS. 9 to 11, when the system supports NB-IoT, DCI may be transmitted and received on an NPDCCH, UL data may be transmitted and received at least once on an NPUSCH, DL data may be transmitted and received at least once on an NPDSCH, and an HARQ-ACK feedback may be transmitted and received at least once on an NPUSCH. NPDCCH and MPDCCH may be collectively referred to as PDCCH, NPUSCH may be collectively referred to as PUSCH, and NPDSCH may be collectively referred to as PDSCH.

While a BS and a UE may operate based on the multi-TB scheduling structure using one DCI as described above, the principle of the present disclosure may also be applied to other information transmission schemes such as a UL control channel using UCI.

In the proposed methods of the present disclosure, some of the following methods may be selectively applied. Each method may be performed independently or one or more methods may be performed in combination. Some terms, symbols, sequences, and so on used to describe the present disclosure may be replaced with other terms, symbols, sequences, and so on, as far as the principle of present disclosure is maintained.

### [Method 1]

In the present disclosure, the same TB may be repeatedly transmitted for coverage extension, and a repetition number for the TB may be configured by the BS. For example, repeated TB transmissions may amount to repeated transmissions, in subframes, of a physical channel (e.g., a PDSCH or a PUSCH) scheduled for data transmission by DCI, as is done in MTC.

When DCI may include both of RV information and FH information, it is proposed in Method 1 that the RV information and the FH information are interpreted in a different manner according to a repetition number configured by the BS. This proposed method may be used to reduce the total number of bits in the DCI based on the characteristics of application of an RV and an FH.

RV information may be referred to as, but not limited to, information indicating an RV state, information representing an RV, an RV field, a (DCI) field indicating an RV, and so on according to embodiments. Further, FH information may be referred to as, but not limited to, an FH flag, an FH field, a field indicating FH, an FH indicator, and so on. The FH information may mean information indicating FH by DCI, when FH is enabled. Whether to enable/disable FH may be configured by higher layer signaling, and information indicating whether to enable/disable FH may be referred to as, but not limited to, FH configuration information. For example, the FH configuration information may be referred to as FH indication information.

When a TB is repeatedly transmitted and an RV is changed at each of repeated TB transmission by RC cycling, Method 1 may be advantageous. For example, when there are a total of four available RV states and an RV is cyclically used for each subframe as in MTC, more RVs are used for a larger repetition number. The resulting increased probability of using all RV states decreases the need for RV scheduling by DCI. Further, when a TB is not repeated, there is no period to which FH is applied, which obviates the need for including FH information and thus makes application of the proposed method advantageous.

In an example of Method 1, a total of 2 bits in DCI may be used for RV information and FH information. When a TB scheduled by the DCI is not repeatedly transmitted, it may be configured that all of the 2 bits are used for the RV information and the FH information always has a fixed value. When it is said that FH information always has a fixed value, this may mean that a value indicating disable is always applied or whether to enable/disable FH may be semi-statically fixed by higher-layer signaling (e.g., an SIB or RRC signaling). Alternatively, the FH information may be implicitly determined based on other parameters in the DCI, rather than the FH information is always fixed.

When the TB scheduled by the DCI is repeatedly transmitted two or more times, only one bit of the 2-bit DCI field may be used for the RV information, and the remaining one bit may be used for the FH information. When one bit is used for the RV information, the RV information may be used to select one of RV0 and RV2. When two bits are used for the RV information, the RV information may be used to select one of RV0, RV1, RV2, and RV3.

When the above-described method is applied to MTC, the total number of bits in DCI bits may be decreased by one bit, compared to a legacy DCI format that independently indicates RV information and FH information. Further, when the repetition number is 1, RV information may be represented at the same level as the legacy DCI format. Only when the repetition number is 2 or larger, it is possible to apply FH and thus a frequency diversity gain may be expected. The above-described method is tabulated in Table 3.

**[Table 3]**

| Repetition number | 1 | 2 or larger |
|---|---|---|
| FH information | 0 bit | 1 bit |
| RV information | 2 bits | 1 bit |

In another example of Method 1, when a total of two bits are used for RV information and FH information, and when a TB scheduled by DCI is not repeated or is repeated less than four times, it may be regulated that the two bits are used for the RV information, while the FH information always have a fixed value. When it is said that FH information is fixed, this may mean that a value indicating disable is always applied to FH or FH is semi-statically enabled/disabled by higher-layer signaling. Alternatively, the FH information may be implicitly determined based on other parameters of the DCI, rather than the FH information is always fixed according to embodiments.

When the TB scheduled by the DCI is repeatedly transmitted four or more times, one of the two bits may be for the RV information, and the other one bit may be used to indicate FH. When the RV information is represented in one bit, the RV information may be used to select one of RV0 and RV2. When the RV information is represented in two bits, the RV information may be used to select one of RV0, RV 1, RV2, and RV3. When the above-described method is applied to MTC, the total number of bits in DCI may be decreased by one bit, compared to the legacy DCI format that independently represents an RV and FH.

Further, when the repetition number is 2 or less, the RV information may be represented at the same level as the legacy DCI format. When the repetition number is 2 or less, a diversity gain achievable from FH may not be great. However, a higher RV gain may be achieved, instead of an FH gain. Additionally, when the repetition number is 4 or larger, FH is applicable, and thus a frequency diversity gain may be expected. The above-described method is tabulated in Table 14.

**[Table 4]**

| Repetition number | Less than 4 | 4 or larger |
|---|---|---|
| FH | 0 bit | 1 bit |
| RV | 2 bits | 1 bit |

In another embodiment of Method 1, a total of one bit may be used for RV information and FH information. When a TB scheduled by DCI is not repeated or is repeated less than four times, the one bit in the DCI may be used for the RV information, while the FH information may always have a fixed value. When it is said that FH information always has a fixed value, this may mean that a value indicating disable is always applied or whether to enable/disable FH may be semi-statically fixed by higher-layer signaling (e.g., an SIB or RRC signaling). Alternatively, the FH information may be implicitly determined based on other parameters in the DCI, rather than the FH information is always fixed, according to embodiments.

When the TB scheduled by the DCI is transmitted repeatedly four or more times, or two or more times, it may be configured that the one bit is used for the FH information, while the RV information always has a fixed value. When it is said that RV information always has a fixed value, this may mean that a specific RV value (e.g., RV0) is always applied, or the RV information is semi-statically enabled/disabled by higher-layer signaling (e.g., an SIB or RRC signaling). Alternatively, the RV information may be implicitly determined (e.g., an initial transmission/retransmission) based on other parameters of the DCI, rather than the RV information is always fixed.

When the RV information is represented in one bit, the RV information may be used to select one of RV0 and RV2. When the above-described method is applied to MTC, the total number of bits in DCI may be decreased by 2, compared to the legacy DCI format that independently represents an RV and FH. The above-described method is tabulated in Table 5.

**[Table 5]**

| Repetition number | Less than 4 | 4 or larger |
|---|---|---|
| FH | 0 bit | 1 bit |
| RV | 1 bit | 0 bit |

When DCI may schedule RV information and FH information and at the same time, schedule subframe-wise repeated transmissions of a PDSCH/PUSCH as in MTC CE mode A, the BS may use Method 1 to determine RV information and FH information according to a situation.

### [Method 1-A]

The present disclosure proposes a method of implicitly determining the size of a DCI field (or RV information) that determines an RV for a TB scheduled by DCI according to a code rate applied to a transmission of the TB. The code rate refers to the ratio of the length of a codeword after rate matching to the length of data before channel coding, when the length of the actually transmitted codeword is determined during the rate matching after the data to be transmitted is channel-encoded (e.g., tail bit convolution code (TBCC), turbo code, polar code, low density parity check (LDPC), or the like).

According to an embodiment of Method 1-A, the size of the DCI field (or RV information) for representing an RV may be determined in consideration of a puncturing ratio during rate matching of channel-encoded data based on scheduling information for a TB transmission (e.g., a TBS, the size of time/frequency-domain resources used for the TB transmission, and so on).

Specifically, when up to M bits are available for RV information and X% or more of encoded data may be included in a TB transmission after rate matching, the size of the DCI field for representing an RV may be determined to be Y(≥0) bits. (M-Y) bits that are not used for the RV information may be included in a DCI field for representing information other than an RV. On the other hand, when less than X% of the encoded data may be included in the TB transmission after the rate matching, the size of the DCI field for representing an RV may be determined to be Z(>Y) bits. (M-Z) bits that are not used for representing an RV may be included in a DCI field other than the field for representing an RV.

Method 1-A may increase an RV-based coding gain effect by increasing the scheduling flexibility of an RV in consideration of the characteristics of a circular buffer in the UE and a coding gain brought by the RV, when many encoded bits are punctured during rate matching. On the contrary, when a smaller number of encoded bits are punctured during rate matching or when repetition is applied, the RV-based coding gain is low. Therefore, a gain (e.g., a FH-based diversity gain) may be achieved in another method.

### [Method 1-B]

According to an embodiment of the present disclosure, an FH indicator (or FH information) may be used for a different purpose by a higher-layer configuration as in MTC. Because RV information and an FH indicator are adaptively used through joint encoding in Method 1, when the FH indicator is used for a different purpose, Method 1 may be restrictively applied. Accordingly, the present disclosure may include a method of determining whether Method 1 is applied according to higher-layer signaling indicating (or designating) whether the FH indicator is used for a different purpose.

In an example of Method 1-B, the FH indicator may be used to support 64-quadrature amplitude modulation (64QAM) in MTC. When 64QAM is to be supported for a PDSCH transmission in CE mode A in MTC, it may be indicated that 64QAM is available by RRC signaling. When a repetition number indicated by DCI is 2 or larger, the FH indicator may be used to determine whether FH is applied. When the repetition number is 1, the FH indicator may be used as an additional bit for an MCS field. When the FH indicator may be used for a different purpose according to a repetition number as described above, there may be limitations in applying methods of using the FH indicator to provide RV information as in Method 1, when the repetition number of a PDSCH is small.

To solve the above problem, it is proposed in Method 1-B that when the FH indicator is used for any other purpose by higher-layer signaling, Method 1 is not applied, and when the higher-layer signaling does not exist or the FH information is configured not to be used for any other purpose, Method 1 is applied. For example, in MTC, when a UE of CE mode A is configured to support 64QAM for PDSCH reception by RRC signaling, Method 1 may not be applied, and when it is not signaled whether to support 64QAM, Method 1 may be applied.

For example, when a UE is configured to support 64QAM for PDSCH reception by RRC signaling in MTC CE mode A, a DCI field for FH information exists. When the repetition number for a PDSCH is 1, the FH information may be used to interpret an MCS for supporting 64QAM, whereas when the repetition number for the PDSCH is 2 or larger, the DCI field for the FH information may be used to indicate whether FH is actually applied, without separately providing RV information.

On the contrary, in the case where it is not signaled whether 64QAM is supported, when the repetition number is 4 (or 2) or larger, one bit of DCI may be used as the FH information, and when the repetition number is less than 4 (or 2), the one bit of DCI may be used as the RV information.

According to another embodiment of Method 1-B, a DCI field may be interpreted differently depending on whether an FH indicator is used for any other purpose by higher-layer signaling. For example, when one bit is designated for an FH indicator and RV information in MTC, and 64QAM support is determined by RRC signaling, a UE which is not indicated to use 64QAM may interpret the DCI field as illustrated in Table 5. Further, when the UE is indicated to use 64QAM by RRC signaling, the DCI field may be interpreted as illustrated in Table 6. Specifically, when the repetition number is 1, one bit may be used as a field for interpreting an MCS for supporting 64QAM, and when the repetition number is 2, the one bit may be used as RV information. When the repetition number is 4, the one bit may be used as an FH indicator.

**[Table 6]**

| Repetition number | 1 | 2 | 4 or larger |
|---|---|---|---|
| FH | 0 bit | 0 bit | 1 bit |
| RV | 0 bit | 1 bit | 0 bit |
| 64 QAM | 1 bit | 0 bit | 0 bit |

It may be assumed that a UE supporting 64QAM is generally in a good MCL (i.e., good coverage) state, and thus it may be predicted that the UE may have a low retransmission probability. Further, when 64QAM is used, the amount of information transmittable in one RE greatly increases. Therefore, there is a high possibility that no bit is punctured or a relatively small number of bits are punctured during rate matching. Considering this characteristic, it may be expected that a UE indicated to use 64QAM will have a relatively small gain from a retransmission scheme in which an RV is indicated. In this respect, Method 1-B is advantageous in that it may be determined whether to provide RV information according to a requirement level of the RV information. Further, network overhead may be reduced because legacy higher-layer signaling is used without separately causing signaling overhead for indicating the above operation.

### [Method 2]

In the present disclosure, multi-TB scheduling is considered to dynamically schedule one or more TBs by one DCI. Further, a case in which the plurality of TBs scheduled by the DCI always have consecutive HARQ process IDs is considered in the present disclosure. In this case, to represent the dynamic number of TBs together with the HARQ process IDs, the DCI may include information about the number of scheduled TBs and information about a starting HARQ process ID. For example, when up to 8 TBs are scheduled by one DCI as in MTC CE mode A, X (≤8) TBs may be dynamically scheduled, and sequential HARQ process IDs for the X TBs, #Y, #(mod(Y+1, 8)), ... , #(mod(Y+X-1, 8)) may be calculated based on information Y about the starting one of the scheduled HARQ process IDs.

In Method 2, it is proposed that a bitmap (or NDI bitmap) for representing NDIs of scheduled TBs, information about the starting one of HARQ process IDs for the scheduled TBs, and some other scheduling information are interpreted differently according to the number of TBs dynamically scheduled by DCI. The other scheduling information may be MCS/TBS information based on which the code rate of a codeword carried by a TB may be determined, and resource assignment (RA) information based on which a frequency-domain resource area used for RE mapping is determined, in MTC.

The proposed method may be used to reduce the total number of bits in DCI in consideration of a specific situation that may be mainly applied when a plurality of TBs are scheduled. Further, the proposed method may be advantageous in a situation in which when payload larger than the maximum size of payload schedulable in one TB is to be transmitted, multi-TB scheduling is used to reduce network overhead by reducing the number of DCI transmissions. For example, when multi-TB scheduling is used, and the same TBS is applied to all TBs scheduled by one DCI, scheduling of X (<Y) TBs with a small TBS may be supported by scheduling of Y TBs with a large TBS. Therefore, a method of reducing the number of DCI bits may be considered, instead of limiting some of a plurality of scheduling methods for supporting the same payload.

Method 2 may be configured by combining one or more of the following options.

**(Option 2-1)** Method 2 may include a method of determining the size of a DCI field for information about the starting one of the HARQ process IDs of TBs scheduled by DCI according to the number of the scheduled TBs, like Option 2-1. Characteristically, as the number of TBs scheduled by one DCI increases, a method of reducing the number of bits representing the starting one of the HARQ process IDs of the scheduled TBs may be considered. For example, when up to 8 TBs are scheduled by one DCI as in CE mode A of MTC, and all 8 TBs are scheduled by multi-TB scheduling DCI, information about a starting HARQ process ID may not be required.

On the other hand, when only a small number of TBs are scheduled, a maximum number of cases should be supported to utilize all of HARQ process IDs. For example, a 3-bit DCI field may be needed to represent all numbers from 1 to 8.

**(Option 2-2)** In Method 2, the size of a bitmap for representing the NDIs of TBs scheduled by DCI may be determined according to the number of the scheduled TBs, as in Option 2-2. In general, the bitmap may need as many bits as a minimum number of scheduled TBs in order to represent NDIs. Therefore, a method of adaptively reducing the size of an NDI bitmap for a small number of scheduled TBs and adaptively increasing the size of the NDI bitmap for a large number of scheduled TBs may be used. For example, when up to 8 TBs are scheduled by one DCI as in CE mode A of MTC, and all 8 TBs are scheduled by multi-TB scheduling DCI, the bitmap for representing NDIs may need 8 bits. On the other hand, when only X (<8) TBs are scheduled, (8-X) bits are unnecessary in terms of representing NDIs. Therefore, according to Option 2-2, as the number of scheduled TBs decreases, the total bit size (or the total number of bits) of DCI may be decreased by reducing the size of the bitmap for representing NDIs.

**(Option 2-3)** As in Option 2-3, the size of a DCI field for an MCS/TBS (or a DCI field indicating an MCS/TBS) may be determined according to the number of TBs scheduled by DCI in Method 2. Characteristically, as the number of TBs scheduled by one DCI increases, a method of reducing the size of bits in the DCI field for an MCS/TBS may be considered. As described before, when the same payload may be accommodated in one or more scheduling methods, the total number of bits in DCI may be reduced, instead of reducing scheduling flexibility. For example, when up to 8 TBs are scheduled by one DCI as in CE mode A of MTC, and a plurality of TBs (e.g., 2 to 7 TBs) are scheduled, the size of the DCI field for an MCS/TBS may be adaptively determined. When a plurality of TBs are scheduled, the size of the DCI field for an MCS/TBS may be less than or equal to the size of the DCI field for an MCS/TBS when one TB is scheduled.

**(Option 2-4)** As in Option 2-4, the size of a DCI field for an RA (or a DCI field indicating an RA) may be determined according to the number of TBs scheduled by DCI in Method 2. Characteristically, as the number of TBs scheduled by one DCI increases, a method of reducing the size of bits in the DCI field for an RA may be considered. Particularly, when it may be assumed that a plurality of TBs are scheduled and a relatively large TBS is selected by applying Option 2-3, Option 2-4 may be used exclude allocation of a small-size frequency domain resource to ensure the code rate of each TB. According to some embodiments, a DCI field for an RA may be referred to as, not limited to, a DCI field for RA information, a DCI field indicating an RA, a field for an RA, a DCI field representing RA, or a DCI field used for an RA.

On the contrary, when a TBS per TB is large and a small-size RA is used, a code rate may increase, thereby degrading decoding performance and causing the difficulty of supporting a target MCL. For example, when up to 8 TBs are scheduled by one DCI as in CE mode A of MTC, and a plurality of TBs (2 to 7 TBs) are scheduled, the size of the DCI field for an RA may be determined adaptively. The size of the DCI field for an RA may be less than or equal to the size of a DCI field that may be used for an RA, when one TB is scheduled.

**(Option 2-5)** As in Option 2-5, the size of a DCI field for an MCS and/or an RA may be determined by a flag bit(s) field included in DCI in Method 2. Characteristically, a method of determining a configuration scheme for the remaining DCI fields according to a flag bit(s) field included in DCI, and reducing the number of bits in the field for an MCS and/or an RA in some configuration schemes may be considered. Particularly, because a small TBS leads to a small size of a bitmap (or states) for representing HARQ IDs and NDIs, more information may be transmitted. In this case, the above method may be intended to reduce the computation complexity of a UE and maximize the size of available information. Specifically, in the multi-TB scheduling DCI using the flag bit(s) field, the flag bit(s) field may be used to distinguish a method of supporting the field for an MCS and an RA to have a smaller size compared to the legacy DCI for single-TB scheduling only from a method of supporting the field for an MCS and an RA so that the field may have the same size as the legacy DCI for single-TB scheduling only, when only a small number of TBs (e.g., one or two TBs) are scheduled.

Table 7 illustrates an example of configuring some areas of DCI fields by combining Option 2-1, Option 2-2, Option 2-3, and Option 2-4 in a situation in which up to 8 TBs are scheduled by one DCI. Referring to Table 7 below, as the number of scheduled TBs increases, the size of a bitmap for representing NDIs increases according to the number of the scheduled TBs. The numbers of bits for representing an MCS, an RA, and a starting HARQ process ID may decrease in DCI by as much as the increment of the size of the NDI bitmap, and as a result, the total bit size of the DCI may always be maintained equal. In Table 7, the bit size of the field for an RA may mean a minimum bit size, and one to four bits may be added according to the size of a bandwidth in which a PDSCH may be transmitted.

**[Table 7]**

| Number of scheduled TBs | Sizes of DCI fields | | | |
|---|---|---|---|---|
| | Starting HARQ process ID | NDI bitmap | MCS | RA |
| 8 | 0 bit | 8 bits | 2 bits | 2 bits |
| 7 | 1 bit | 7 bits | 2 bits | 2 bits |
| 6 | 2 bits | 6 bits | 2 bits | 2 bits |
| 5 | 3 bits | 5 bits | 2 bits | 2 bits |
| 4 | 3 bits | 4 bits | 2 bits | 3 bits |
| 3 | 3 bits | 3 bits | 2 bits | 4 bits |
| 2 | 3 bits | 2 bits | 3 bits | 4 bits |
| 1 | 3 bits | 1 bits | 4 bits | 4 bits |

Table 8 illustrates an example of designing some areas of DCI fields by combining Option 2-2 and Option 2-5 in a situation where up to 8 TBs are scheduled by one DCI. Referring to Table 8, according to the state of a flag bit, the sizes of fields for an MCS and an RA may be determined, and a method of using the same sizes as those of MCS and RA fields in the legacy single-TB scheduling DCI and a method of decreasing the size of each of the MCS and RA fields by 1 bit are available. In Table 8, Others means all cases in which the method of reducing the MCS/RA field by a flag is applied, which may be designed by combining other methods and options proposed in the present disclosure (e.g., Option 2-1, Option 2-2, Option 2-3, and Option 2-4). Further, in Table 8, the states of the flag are an example given for illustrative purposes, and the spirit of the present disclosure is equally applicable to other methods of representing a flag. Further, in Table 8, the flag bit(s) field may not exist according to an upper flag bit or information included in other fields. In the absence of the flag bit(s) field, the bit sizes of the fields for an MCS and an RA may be configured to correspond to Others. In the following example, the bit size of the field for an RA means a required minimum bit size, and 1 to 4 bits may be added according to the size of a bandwidth in which a PDSCH may be transmitted.

**[Table 8]**

| Number of scheduled TBs | Sizes of DCI fields | | | |
|---|---|---|---|---|
| | Flag bit(s) | NDI bitmap | MCS | RA |
| 1 | Flag = 1 | 1 bit | 4 bits | 5 bits |
| 2 | | 2 bits | 4 bits | 5 bits |
| Others | Flag = 0 (Or not exist) | Y bits | 3 bits | 4 bits |

Table 9 illustrates an example of designing some areas of DCI fields by combining Option 2-2, Option 2-3, Option 2-4, and Option 2-5, when up to 8 TBs are scheduled by one DCI. Referring to Table 9, when the number of scheduled TBs is 1 or 2, the sizes of DCI fields for an MCS and an RA are 4 bits and 5 bits, respectively, and in the other cases, they are 3 bits and 4 bits, respectively. In Table 9, the size of bits for an RA means a required minimum bit size, and 1 to 4 bits may be added according to the size of a bandwidth in which a PDSCH may be transmitted.

**[Table 9]**

| Number of scheduled TBs | Sizes of DCI fields | | | |
|---|---|---|---|---|
| | Number of TBs and HARQ 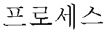 ID | NDI bitmap | MCS | RA |
| 1 | 9 bits | 1 bit | 4 bits | 5 bits |
| 2 | 8 bits | 2 bits | 4 bits | 5 bits |
| 4 | 8 bits | 4 bits | 3 bits | 4 bits |
| 6 | 6 bits | 6 bits | 3 bits | 4 bits |
| 8 | 4 bits | 8 bits | 3 bits | 4 bits |

When the size of the DCI field for an MCS/TBS and the size of the DCI field for an RA are limited by the number of scheduled TBs as in Option 2-3, Option 2-4, and Option 2-5, scheduling flexibility may be limited. To compensate for the limitation, a method of semi-statically configuring information represented by the decreased DCI fields by higher-layer signaling such as an SIB or RRC signaling may be considered. For example, when 2 bits are used for the DCI field representing an MCS in Table 7, an MCS index indicated by the 2 bits may be determined by RRC signaling.

### [Method 3]

In the present disclosure, multi-TB scheduling is considered to dynamically schedule one or more TBs by one DCI. Further, a case in which the BS indicates a maximum number of TBs scheduled by one DCI is considered in the present disclosure. For example, the BS may indicate the maximum number of TBs scheduled by one DCI by higher-layer signaling such as an SIB or RRC signaling.

In the present disclosure, it is proposed that the number of bits and information of each field in DCI are different according to the maximum number of TBs scheduled by one DCI, set by the BS. For example, DCI fields may include a bitmap for representing NDIs of TBs, an MCS/TBS for the scheduled TBs, an RA, and other scheduling information in Method 3. Therefore, Method 3 may overcome the increase of the total number of bits in DCI caused by an increase in the number of pieces of information required for each TB, proportional to the number of TBs scheduled by one DCI. Further, according to method 3, the BS may determine an appropriate total number of bits in DCI by evaluating the importance between network overhead and DCI decoding performance and their influence on performance.

In the case where Method 3 is applied and the BS indicates a maximum number of TBs scheduled by one DCI by a higher-layer signal, when the bit size of DCI is set, the number of actual TBs scheduled by the DCI may be determined based on information included in the DCI. Further, a method of differentiating the sizes and interpretations of the remaining fields in the DCI according to the number of actually scheduled TBs may be used together with Method 3. For example, Method 1, Method 1-A, Method 1-B, and/or Method 2 proposed in the present disclosure may be used in combination with Method 3.

Method 3 may be configured by combining one or more of the following options.

**(Option 3-1)** Method 3 may include a method of determining the size of a DCI field for an NDI bitmap (or a DCI field used as an NDI bitmap) for scheduled TBs according to the maximum number of TBs scheduled by one DCI, like Option 3-1. Specifically, according to Option 3-1, the size of the DCI field for an NDI bitmap may be determined in proportion to the maximum number of TBs scheduled by one DCI. For example, when up to 8 HARQ processes are supported as in CE mode A of MTC, and the BS configures up to N_{TB}(≤8) TBs scheduled by one DCI, the size of the DCI field for an NDI bitmap may be determined to be up to N_{TB} bits. Compared to DCI that may schedule all of 8 TBs, (8-N_{TB}) bits may be reduced. The DCI field used as an NDI bitmap may be used as an NDI bitmap or to partially represent other information, according to the number of actually scheduled TBs.

**(Option 3-2)** Method 3 may include a method of determining the size of a DCI field for an MCS/TBS according to the maximum number of TBs scheduled by one DCI, like Option 3-2. According to an embodiment, the DCI field for an MCS/TBS may be referred to as, but not limited to, a field used for the purpose of an MCS/TBS, a field indicating an MCS/TBS, and so on. Specifically, according to Option 3-2, as the maximum number of TBs scheduled by one DCI increases, the size of the DCI field for an MCS/TBS may be configured to be small. Further, according to Option 3-2, when the maximum number of TBs scheduled by one DCI is less than or equal to a specific value, the size of the DCI field for an MCS/TBS may be configured to the maximum size of the DCI field for an MCS/TBS purpose (e.g., the size of a field used for the purpose of an MCS/TB S in the legacy DCI for single-TB scheduling only). For example, in MTC CE mode A, when the maximum number of TBs scheduled by one DCI, set by the BS is less than or equal to Ncnr, the size of the DCI field for an MCS may be determined to be 4 bits. Herein, the 4 bits may be subjected to the same MCS interpretation method as DCI that schedules one TB. On the other hand, when the maximum number of TBs scheduled by one DCI is greater than Nₜₕᵣ, the size of the DCI field for an MCS may be determined to equal to or less than 4 bits.

**(Option 3-3)** Method 3 may include a method of determining the size of a DCI field for an RA according to the maximum number of TBs scheduled by one DCI, like Option 3-3. Specifically, according to Option 3-3, as the maximum number of TBs scheduled by one DCI increases, the size of the DCI field indicating an RA may be reduced. According to Option 3-3, even though the size of the DCI field indicating an RA is decreased to reduce the total number of bits in DCI, scheduling flexibility may be ensured at the same level as the legacy single-TB scheduling DCI under some condition (e.g., the maximum number of TBs scheduled by one DCI is less than or equal to a certain value). For example, in MTC CE mode A, when the maximum number of TBs scheduled by one DCI, set by the BS is less than or equal to Ncnr, the minimum size of the DCI field indicating an RA is 5 bits. Herein, the 5 bits may be subjected to the same RA interpretation method as when the BS designates single-TB scheduling DCI. On the other hand, when the maximum number of TBs scheduled by one DCI, set by the BS is greater than Ncnr, the number of bits used in the DCI field indicating an RA may be 4 or less.

**(Option 3-4)** Method 3 may include a method of determining the size of a DCI field for FH information and/or RV information according to the maximum number of TBs scheduled by one DCI, like Option 3-4. Specifically, according to Option 3-4, one of the methods of configuring FH and/or an RV proposed in Method 1 may be selected or the FH and RV configuration method used in the legacy DCI may be selected, the maximum number of TBs scheduled by one DCI.. For example, in MTC CE mode A, when the maximum number of TBs scheduled by one DCI, set by the BS is less than or equal to Ncnr, the size of the DCI field indicating FH may be one bit, and the size of the DCI field indicating an RV may be two bits. The DCI fields may be interpreted in the same manner as when the BS designates single-TB scheduling DCI. On the other hand, when the maximum number of TBs scheduled by one DCI, set by the BS is greater than Nₜₕᵣ, one of the methods proposed in Method 1 may be applied.

**(Option 3-A)** Method 3 may include a method of determining whether to apply the methods proposed in Method 2 according to the maximum number of TBs scheduled by one DCI, like Option 3-A. For example, in MTC CE mode A, when the maximum number of TBs scheduled by one DCI, set by the BS is less than or equal to Ncnr, the size of the DCI field indicating an MCS may be always 4 bits, and the 4 bits may always represent the same MCS information regardless of the number of actually scheduled TBs. On the other hand, when the maximum number of TBs scheduled by one DCI, set by the BS is greater than Nₜₕᵣ, the size and interpretation of the DCI field indicating an MCS/TBS may be different according to the number of TBs actually scheduled by DCI, as in Option 2-3. While the above example has been described in the context of the DCI field indicating an MCS/TBS, Option 3-A may also be applied to other DCI fields (e.g., RA, FH, and/or RV) to which Method 3 is applicable.

### [Method 4]

In the present disclosure, multi-TB scheduling is considered to dynamically schedule one or more TBs by one DCI. For example, the BS may dynamically allocate the number of scheduled TBs for the UE by DCI.

In Method 4, a method of differentiating the size and interpretation of a DCI field indicating an MCS/TBS for scheduled TBs or a DCI field for RV information and/or FH information for the scheduled TBs according to the number of TBs dynamically scheduled by DCI is proposed. Method 4 may be used to dynamically determine the scheduling flexibility of an RV and FH based on the property that each field included in DCI requires a different degree of scheduling flexibility according to the number of scheduled TBs.

According to some embodiments, a DCI field for RV information and/or FH information may be referred to as, not limited to, a DCI field indicating an RV and/or FH, a DCI field for representing an RV and/or FH, and so on.

For the size and interpretation of a DCI field for RV information and/FH information, the proposed methods of Method 1 may be used in Method 4. For example, the DCI field for RV information and/FH information may be interpreted by selecting one of the tables proposed in Method 1 according to the number of TBs scheduled by the corresponding DCI. Alternatively, according to some embodiments, for the size and interpretation of the DCI field for RV information and/FH information in Method 4, the size and interpretation method of the DCI field for RV information and/FH information defined in the legacy DCI may be used.

In an example of Method 4, when the number of TBs scheduled by DCI is 1, P bits may be used for RV information and FH information. When the number of TBs scheduled by the DCI is 2 or larger, Q (<P) bits may be used for the RV information and the FH information. For example, P may be, but not limited to, 2 and Q may be, but not limited to, 1. When the BS is to schedule only one TB, Method 4 may be used to ensure scheduling flexibility at the same level as or at a similar level to that of the legacy DCI.

In an example of Method 4, when the number of TBs scheduled by DCI is 1, P bits may be used for an MCS/TBS. When the number of TBs scheduled by the DCI is 2 or larger, Q (<P) bits may be used for the MCS/TBS. For example, P may be, but not limited to, 4 and Q may be, but not limited to, 3. When the BS is to schedule only one TB, Method 4 may be used to ensure scheduling flexibility at the same level as or at a similar level to that of the legacy DCI.

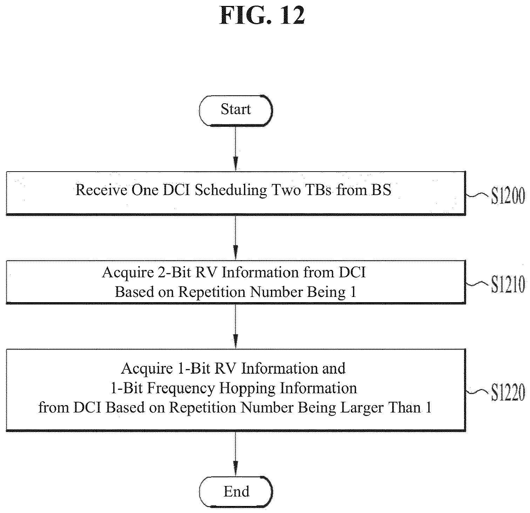

FIG. 12 is a flowchart illustrating an operation of a UE according to an embodiment of the present disclosure.

According to an embodiment of the present disclosure, the UE may receive one DCI that schedules two TBs from a BS (S1200). The DCI may include DCI for RV information and FH information. The number of bits used for the RV information and the FH information in the DCI may vary according to the repetition number of the TBs scheduled by the DCI. For example, when the repetition number of the TBs scheduled by the DCI is 1, the DCI may include 2-bit RV information, while the FH information may have a fixed value or may be semi-statically determined higher-layer signaling. When the repetition number is larger than 1, the DCI may include 1-bit RV information and 1-bit FH information. Accordingly, based on the repetition number being 1, the UE may obtain the 2-bit RV information from the DCI (S1210). Based on the repetition number being larger than 1, the UE may obtain the 1-bit RV information and the 1-bit FH information (S1220). When the RV information is represented in one bit, the RV information may be used to select one of RV0 and RV2. When the RV information is represented in two bits, the RV information may be used to select one of RV0, RV1, RV2, and RV3. According to an embodiment of the present disclosure, the total number of bits in DCI may be reduced by joint encoding of RV information and FH information, compared to the legacy DCI format that independently represents RV information and FH information.

### Network Access and Communication Process

A UE may perform a network access process to perform the aforedescribed/proposed procedures and/or methods. For example, the UE may receive system information and configuration information required to perform the afore-described/proposed procedures and/or methods and store the received information in a memory, while accessing a network (e.g., a BS). The configuration information required for the present disclosure may be received by higher-layer signaling (e.g., RRC signaling or medium access control (MAC) signaling).

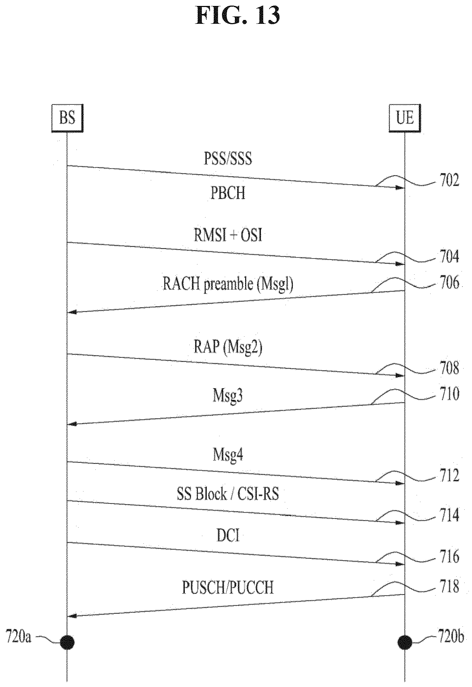

FIG. 13 is a diagram illustrating an exemplary initial network access and subsequent communication process. In NR, a physical channel and an RS may be transmitted by beamforming. When beamforming-based signal transmission is supported, beam management may be performed for beam alignment between a BS and a UE. Further, a signal proposed in the present disclosure may be transmitted/received by beamforming. In RRC_IDLE mode, beam alignment may be performed based on an SSB, whereas in RRC_CONNECTED mode, beam alignment may be performed based on a CSI-RS (in DL) and an SRS (in UL). On the contrary, when beamforming-based signal transmission is not supported, beam-related operations may be omitted in the description of the present disclosure.

Referring to FIG. 13, a BS (e.g., eNB) may periodically transmit an SSB (S702). The SSB includes a PSS/SSS/PBCH. The SSB may be transmitted by beam sweeping. The PBCH may include a master information block (MIB), and the MIB may include scheduling information for remaining minimum system information (RMSI). The BS may then transmit the RMSI and other system information (OSI) (S704). The RMSI may include information required for the UE to perform initial access to the BS (e.g., PRACH configuration information). After detecting SSBs, the UE identifies the best SSB. The UE may then transmit an RACH preamble (Message 1 or Msg1) in PRACH resources linked/corresponding to the index (i.e., beam) of the best SSB (S706). The beam direction of the RACH preamble is associated with the PRACH resources. Association between PRACH resources (and/or RACH preambles) and SSBs (SSB indexes) may be configured by system information (e.g., RMSI). Subsequently, as a part of an RACH procedure, the BS may transmit a random access response (RAR) (Msg2) in response to the RACH preamble (S708), the UE may transmit Msg3 (e.g., RRC Connection Request) based on a UL grant included in the RAR (S710), and the BS may transmit a contention resolution message (Msg4) (S720). Msg4 may include RRC Connection Setup.

When an RRC connection is established between the BS and the UE in the RACH procedure, beam alignment may subsequently be performed based on an SSB/CSI-RS (in DL) and an SRS (in UL). For example, the UE may receive an SSB/CSI-RS (S714). The SSB/CSI-RS may be used for the UE to generate a beam/CSI report. The BS may request the UE to transmit a beam/CSI report, by DCI (S716). In this case, the UE may generate a beam/CSI report based on the SSB/CSI-RS and transmit the generated beam/CSI report to the BS on a PUSCH/PUCCH (S718). The beam/CSI report may include a beam measurement result, information about a preferred beam, and so on. The BS and the UE may switch beams based on the beam/CSI report (S720a and S720b).

Subsequently, the UE and the BS may perform the above-described/proposed procedures and/or methods. For example, the UE and the BS may transmit a wireless signal by processing information stored in a memory or may process received wireless signal and store the processed signal in the memory according to a proposal of the present disclosure, based on configuration information obtained in the network access process (e.g., the system information acquisition process, the RRC connection process through an RACH, and so on). The wireless signal may include at least one of a PDCCH, a PDSCH, or an RS on DL and at least one of a PUCCH, a PUSCH, or an SRS on UL.

The above description may be applied commonly to MTC and NB-IoT. Parts that are likely to be changed in MTC and NB-IoT will be additionally described below.

### MTC Network Access Process

An MTC network access procedure will be further described based on LTE. The MIB in LTE includes 10 reserved bits. In MTC, 5 most significant bits (MSBs) out of 10 reserved bits in an MIB is used to indicate scheduling information for a system information block for bandwidth reduced device (SIB1-BR). The 5 MSBs are used to indicate the repetition number and transport block size (TBS) of the SIB1-BR. The SIB1-BR is transmitted on a PDSCH. The SIB1-BR may not be changed over 512 radio frames (5120ms) to allow multiple subframes to be combined. Information carried in the SIB1-BR is similar to that of the SIB1 in the LTE system.

An MTC RACH procedure is basically the same as the LTE RACH procedure, except the following difference: the MTC or RACH procedure is performed based on a coverage enhancement (CE) level. For example, whether a PRACH is repeatedly transmitted/the repetition number of the PRACH may be different at each CE level, for PRACH coverage enhancement.

Table 10 lists CE modes/levels supported in MTC. MTC supports two modes CE mode A and CE mode B and four levels, level 1 to level 4, for coverage enhancement.

**[Table 10]**

| Mode | Level | Description |
|---|---|---|
| Mode A | Level 1 | No repetition |
| | Level 2 | Small Number of Repetition |
| Mode B | Level 3 | Medium Number of Repetition |
| | Level 4 | Large Number of Repetition |

CE mode A is defined for small coverage where full mobility and CSI feedback are supported. In CE mode A, the number of repetitions is zero or small. CE mode B is defined for a UE with a very poor coverage condition where CSI feedback and limited mobility are supported. In CE mode B, the number of times that transmission is repeated is large.

A BS may broadcast system information including a plurality of (e.g., three) reference signal received power (RSRP) thresholds, and a UE may compare the RSRP thresholds with an RSRP measurement to determine a CE level. For each CE level, the following information may be independently configured through system information.
- PRACH resource information: A periodicity/offset of a PRACH occasion and a PRACH frequency resource
- Preamble group: A set of preambles allocated for each CE level
- A repetition number per preamble attempt, and a maximum number of preamble attempts
- RAR window time: The duration (e.g., the number of subframes) of a time period in which RAR reception is expected
- Contention resolution window time: The duration of a time period in which reception of contention resolution message is expected

After selecting a PRACH resource corresponding to its CE level, the UE may perform a PRACH transmission in the selected PRACH resource. A PRACH waveform used in MTC is the same as a PRACH waveform used in LTE (e.g., OFDM and Zadoff-Chu sequence). Signals/messages transmitted after the PRACH may also be repeatedly transmitted, and the repetition number may be independently set according to a CE mode/level.

### An Example of Communication System to Which the Present Disclosure is Applied

Various descriptions, functions, procedures, proposals, methods, and/or flowcharts of the present disclosure may be applied to, but not limited to, various fields requiring wireless communication/connection (e.g., 5G) among devices.

Hereinafter, they will be described in more detail with reference to the drawings. In the following drawings/description, the same reference numerals may denote the same or corresponding hardware blocks, software blocks, or functional blocks, unless specified otherwise.

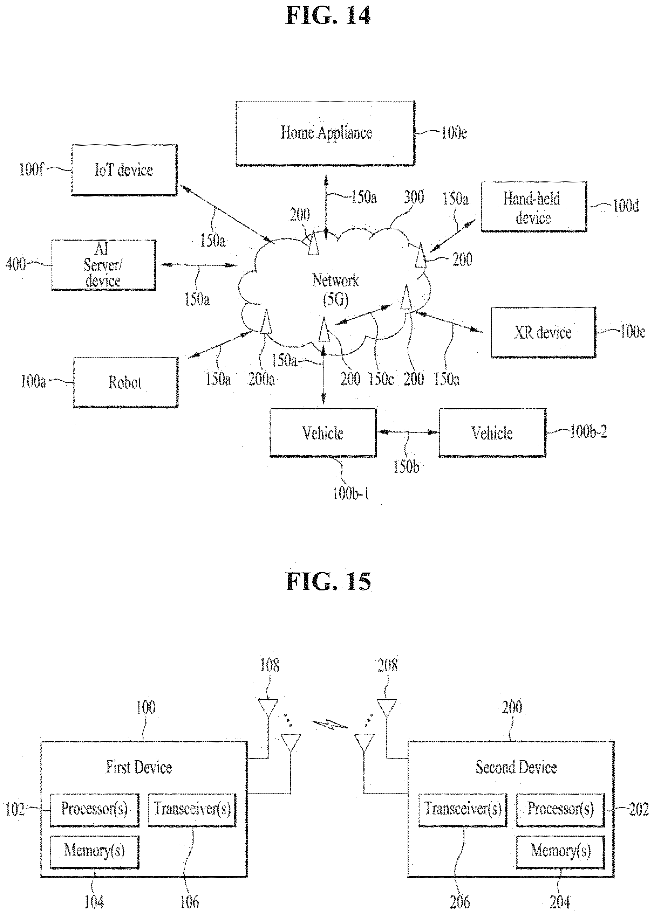

FIG. 14 illustrates a communication system applied to the present disclosure.

Referring to FIG. 14, the communication system applied to the present disclosure includes wireless devices, base stations (BSs), and a network. The wireless devices refer to devices performing communication by radio access technology (RAT) (e.g., 5G New RAT (NR) or LTE), which may also be called communication/radio/5G devices. The wireless devices may include, but no limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle equipped with a wireless communication function, an autonomous driving vehicle, and a vehicle capable of performing vehicle-to-vehicle (V2V) communication. The vehicles may include an unmanned aerial vehicle (UAV) (e.g., a drone). The XR device may include an augmented reality (AR)/virtual reality (VR)/mixed reality (MR) device, and may be implemented in the form of a head-mounted device (HMD), a head-up display (HUD) mounted in a vehicle, a television (TV), a smartphone, a computer, a wearable device, a home appliance, a digital signage, a vehicle, a robot, and so on. The hand-held device may include a smartphone, a smartpad, a wearable device (e.g., a smartwatch or smart glasses), and a computer (e.g., a laptop). The home appliance may include a TV, a refrigerator, and a washing machine. The IoT device may include a sensor and a smart meter. For example, the BSs and the network may be implemented as wireless devices, and a specific wireless device 200a may operate as a BS/network node for other wireless devices.

The wireless devices 100a to 100f may be connected to the network 300 via the BSs 200. An AI technology may be applied to the wireless devices 100a to 100f, and the wireless devices 100a to 100f may be connected to the AI server 400 via the network 300. The network 300 may be configured by using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without intervention of the BSs/network. For example, the vehicles 100b-1 and 100b-2 may perform direct communication (e.g. V2V/vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f and the BSs 200, or between the BSs 200. Herein, the wireless communication/connections may be established through various RATs (e.g., 5G NR) such as UL/DL communication 150a, sidelink communication 150b (or, D2D communication), or inter-BS communication 150c (e.g. relay, integrated access backhaul (IAB)). A wireless device and a BS/a wireless devices, and BSs may transmit/receive radio signals to/from each other through the wireless communication/connections 150a, 150b, and 150c. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

### Examples of Wireless Devices to Which the Present Disclosure is Applied

FIG. 15 illustrates wireless devices applicable to the present disclosure.

Referring to FIG. 15, a first wireless device 100 and a second wireless device 200 may transmit radio signals through a variety of RATs (e.g., LTE and NR).

The first wireless device 100 may include at least one processor 102 and at least one memory 104, and may further include at least one transceiver 106 and/or at least one antenna 108. The processor 102 may control the memory 104 and/or the transceiver 106 and may be configured to implement the descriptions, functions, procedures, proposals, methods, and/or operational flowcharts disclosed in this document. For example, the processor 102 may process information within the memory 104 to generate first information/signal and then transmit a radio signal including the first information/signal through the transceiver 106. The processor 102 may receive a radio signal including second information/signal through the transceiver 106 and then store information obtained by processing the second information/signal in the memory 104. The memory 104 may be coupled to the processor 102 and store various types of information related to operations of the processor 102. For example, the memory 104 may store software code including commands for performing a part or all of processes controlled by the processor 102 or for performing the descriptions, functions, procedures, proposals, methods, and/or operational flowcharts disclosed in this document. Herein, the processor 102 and the memory 104 may be a part of a communication modem/circuit/chip designed to implement an RAT (e.g., LTE or NR). The transceiver 106 may be coupled to the processor 102 and transmit and/or receive radio signals through the at least one antenna 108. The transceiver 106 may include a transmitter and/or a receiver. The transceiver 106 may be interchangeably used with an RF unit. In the present disclosure, a wireless device may refer to a communication modem/circuit/chip.

The second wireless device 200 may include at least one processor 202 and at least one memory 204, and may further include at least one transceiver 206 and/or at least one antenna 208. The processor 202 may control the memory 204 and/or the transceiver 206 and may be configured to implement the descriptions, functions, procedures, proposals, methods, and/or operational flowcharts disclosed in this document. For example, the processor 202 may process information within the memory 204 to generate third information/signal and then transmit a radio signal including the third information/signal through the transceiver 206. The processor 202 may receive a radio signal including fourth information/signal through the transceiver 206 and then store information obtained by processing the fourth information/signal in the memory 204. The memory 204 may be coupled to the processor 202 and store various types of information related to operations of the processor 202. For example, the memory 204 may store software code including commands for performing a part or all of processes controlled by the processor 202 or for performing the descriptions, functions, procedures, proposals, methods, and/or operational flowcharts disclosed in this document. Herein, the processor 202 and the memory 204 may be a part of a communication modem/circuit/chip designed to implement an RAT (e.g., LTE or NR). The transceiver 206 may be coupled to the processor 202 and transmit and/or receive radio signals through the at least one antenna 208. The transceiver 206 may include a transmitter and/or a receiver. The transceiver 206 may be interchangeably used with an RF unit. In the present disclosure, a wireless device may refer to a communication modem/circuit/chip.

Hereinafter, hardware elements of the wireless devices 100 and 200 will be described in greater detail. One or more protocol layers may be implemented by, but not limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more protocol data units (PDUs) and/or one or more service data units (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented in hardware, firmware, software, or a combination thereof. For example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, proposals, methods, and/or operational flowcharts disclosed in this document may be implemented in firmware or software, which may be configured to include modules, procedures, or functions. Firmware or software configured to perform the descriptions, functions, procedures, proposals, methods, and/or operational flowcharts disclosed in this document may be included in the one or more processors 102 and 202, or may be stored in the one or more memories 104 and 204 and executed by the one or more processors 102 and 202. The descriptions, functions, procedures, proposals, methods, and/or operational flowcharts disclosed in this document may be implemented as code, instructions, and/or a set of instructions in firmware or software.

The one or more memories 104 and 204 may be coupled to the one or more processors 102 and 202 and store various types of data, signals, messages, information, programs, code, instructions, and/or commands. The one or more memories 104 and 204 may be configured as read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be coupled to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be coupled to the one or more processors 102 and 202 and transmit and receive radio signals. For example, the one or more processors 102 and 202 may control the one or more transceivers 106 and 206 to transmit user data, control information, or radio signals to one or more other devices. The one or more processors 102 and 202 may control the one or more transceivers 106 and 206 to receive user data, control information, or radio signals from one or more other devices. The one or more transceivers 106 and 206 may be coupled to the one or more antennas 108 and 208 and configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

### Example of Using Wireless Device to Which the Present Disclosure is Applied

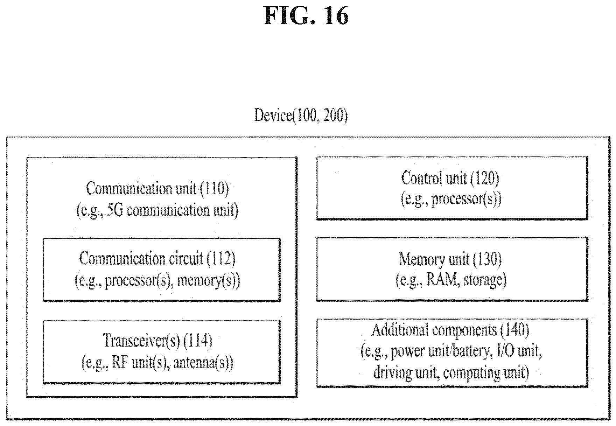

FIG. 16 illustrates another example of wireless devices applied to the present disclosure. The wireless devices may be implemented in various forms according to use-cases/services (refer to FIG. 14).

Referring to FIG. 16, wireless devices 100 and 200 may correspond to the wireless devices 100 and 200 of FIG. 15 and may be configured as various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 15. For example, the transceiver(s) 114 may include the one or more transceivers 106 and 206 and/or the one or more antennas 108 and 208 of FIG. 15. The control unit 120 is electrically coupled to the communication unit 110, the memory unit 130, and the additional components 140 and provides overall control to operations of the wireless devices. For example, the control unit 120 may control an electric/mechanical operation of the wireless device based on programs/code/commands/information stored in the memory unit 130. The control unit 120 may transmit the information stored in the memory unit 130 to the outside (e.g., other communication devices) via the communication unit 110 through a wireless/wired interface or store, in the memory unit 130, information received through the wireless/wired interface from the outside (e.g., other communication devices) via the communication unit 110.

The additional components 140 may be configured in various manners according to the types of wireless devices. For example, the additional components 140 may include at least one of a power unit/battery, an input/output (I/O) unit, a driver, and a computing unit. The wireless device may be configured as, but not limited to, the robot (100a of FIG. 14), the vehicles (100b-1 and 100b-2 of FIG. 14), the XR device (100c of FIG. 14), the hand-held device (100d of FIG. 14), the home appliance (100e of FIG. 14), the IoT device (100f of FIG. 14), a digital broadcasting terminal, a hologram device, a public safety device, an MTC device, a medicine device, a FinTech device (or a finance device), a security device, a climate/environment device, the AI server/device (400 of FIG. 14), the BSs (200 of FIG. 14), a network node, etc. The wireless device may be mobile or fixed according to a use-case/service.

In FIG. 16, all of the various elements, components, units/portions, and/or modules in the wireless devices 100 and 200 may be coupled to each other through a wired interface or at least a part thereof may be wirelessly coupled to each other through the communication unit 110. For example, in each of the wireless devices 100 and 200, the control unit 120 and the communication unit 110 may be coupled wiredly, and the control unit 120 and first units (e.g., 130 and 140) may be wirelessly coupled through the communication unit 110. Each element, component, unit/portion, and/or module within the wireless devices 100 and 200 may further include one or more elements. For example, the control unit 120 may be configured as a set of one or more processors. For example, the control unit 120 may be configured as a set of a communication control processor, an application processor, an electronic control unit (ECU), a graphical processing unit, and a memory control processor. In another example, the memory unit 130 may be configured as a random access memory (RAM), a dynamic RAM (DRAM), a read only memory (ROM), a flash memory, a volatile memory, a non-volatile memory, and/or a combination thereof.

An implementation example of FIG. 16 will be described in detail with reference to the drawings.

### Example of Portable Device to Which the Present Disclosure is Applied

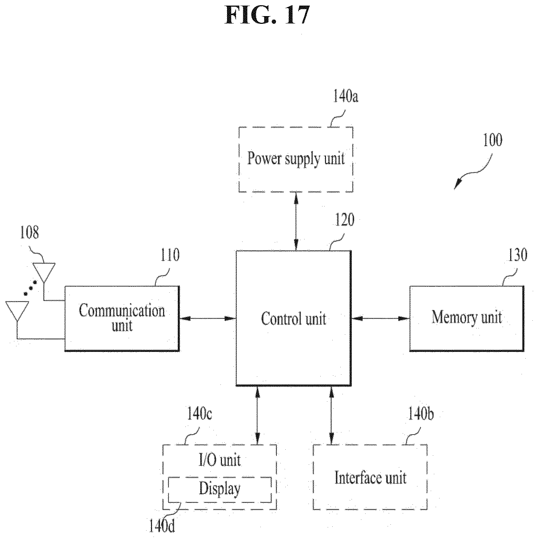

FIG. 17 illustrates a portable device applied to the present disclosure. The portable device may include a smartphone, a smartpad, a wearable device (e.g., a smart watch and smart glasses), and a portable computer (e.g., a laptop). The portable device may be referred to as a mobile station (MS), a user terminal (UT), a mobile subscriber station (MSS), a subscriber station (SS), an advanced mobile station (AMS), or a wireless terminal (WT).

Referring to FIG. 17, a portable device 100 may include an antenna unit 108, a communication unit 110, a control unit 120, a power supply unit 140a, an interface unit 140b, and an I/O unit 140c. The antenna unit 108 may be configured as a part of the communication unit 110. The blocks 110 to 130/140a to 140c correspond to the blocks 110 to 130/140 of FIG. 16, respectively.

The communication unit 110 may transmit and receive signals (e.g., data and control signals) to and from another wireless device and a BS. The control unit 120 may perform various operations by controlling elements of the portable device 100. The control unit 120 may include an application processor (AP). The memory unit 130 may store data/parameters/programs/code/commands required for operation of the portable device 100. Further, the memory unit 130 may store input/output data/information. The power supply unit 140a may supply power to the portable device 100, and include a wired/wireless charging circuit and a battery. The interface unit 140b may include various ports (e.g., an audio I/O port and a video I/O port) for connectivity to external devices The I/O unit 140c may acquire information/signals (e.g., touch, text, voice, images, and video) input by a user, and store the acquired information/signals in the memory unit 130. The communication unit 110 may receive or output video information/signal, audio information/signal, data, and/or information input by the user. The I/O unit 140c may include a camera, a microphone, a user input unit, a display 140d, a speaker, and/or a haptic module.

For example, for data communication, the I/O unit 140c may acquire information/signals (e.g., touch, text, voice, images, and video) received from the user and store the acquired information/signal sin the memory unit 130. The communication unit 110 may convert the information/signals to radio signals and transmit the radio signals directly to another device or to a BS. Further, the communication unit 110 may receive a radio signal from another device or a BS and then restore the received radio signal to original information/signal. The restored information/signal may be stored in the memory unit 130 and output in various forms (e.g., text, voice, an image, video, and a haptic effect) through the I/O unit 140c.

### Example of Vehicle or Autonomous Driving Vehicle to Which the Present Disclosure is Applied

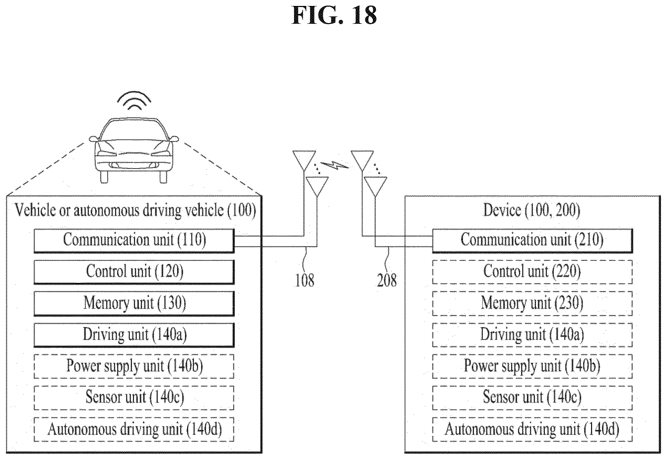

FIG. 18 illustrates a vehicle or an autonomous driving vehicle applied to the present disclosure. The vehicle or autonomous driving vehicle may be configured as a mobile robot, a car, a train, a manned/unmanned aerial vehicle (AV), a ship, or the like.

Referring to FIG. 18, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 16, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an ECU. The driving unit 140a may enable the vehicle or the autonomous driving vehicle 100 to travel on a road. The driving unit 140a may include an engine, a motor, a powertrain, a wheel, a brake, a steering device, and so on. The power supply unit 140b may supply power to the vehicle or the autonomous driving vehicle 100 and include a wired/wireless charging circuit, a battery, and so on. The sensor unit 140c may acquire vehicle state information, ambient environment information, user information, and so on. The sensor unit 140c may include an inertial measurement unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, and so on. The autonomous driving unit 140d may implement a technology for maintaining a lane on which a vehicle is driving, a technology for automatically adjusting speed, such as adaptive cruise control, a technology for autonomously traveling along a determined path, a technology for traveling by automatically setting a path, when a destination is set, and the like.

For example, the communication unit 110 may receive map data, traffic information data, and so on from an external server. The autonomous driving unit 140d may generate an autonomous driving path and a driving plan from the obtained data. The control unit 120 may control the driving unit 140a such that the vehicle or autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain vehicle state information and/or ambient environment information. The autonomous driving unit 140d may update the autonomous driving path and the driving plan based on the newly obtained data/information. The communication unit 110 may transmit information about a vehicle position, the autonomous driving path, and/or the driving plan to the external server. The external server may predict traffic information data using AI technology or the like, based on the information collected from vehicles or autonomous driving vehicles and provide the predicted traffic information data to the vehicles or the autonomous driving vehicles.

The embodiments of the present disclosure described hereinbelow are combinations of elements and features of the present disclosure. The elements or features may be considered selective unless otherwise mentioned. Each element or feature may be practiced without being combined with other elements or features. Further, an embodiment of the present disclosure may be constructed by combining parts of the elements and/or features. Operation orders described in embodiments of the present disclosure may be rearranged. Some constructions or features of any one embodiment may be included in another embodiment and may be replaced with corresponding constructions or features of another embodiment. It is obvious to those skilled in the art that claims that are not explicitly cited in each other in the appended claims may be presented in combination as an embodiment of the present disclosure or included as a new claim by a subsequent amendment after the application is filed.

In the embodiments of the present disclosure, a description is mainly made of a data transmission and reception relationship between a BS and a UE. This transmission and reception relationship is extended in the same/similar manner to signal transmission and reception between a UE and a relay or between a BS and a relay. A specific operation described as being performed by the BS may be performed by an upper node of the BS. Namely, it is apparent that, in a network comprised of a plurality of network nodes including a BS, various operations performed for communication with a UE may be performed by the BS, or network nodes other than the BS. The term BS may be replaced with a fixed station, a Node B, an eNode B (eNB), gNode B (gNB), an access point, etc. Further, the term UE may be replaced with a UE, a mobile station (MS), a mobile subscriber station (MSS), etc.

The embodiments of the present invention may be implemented through various means, for example, hardware, firmware, software, or a combination thereof. In a hardware configuration, an embodiment of the present disclosure may be achieved by one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, etc.

In a firmware or software configuration, an embodiment of the present disclosure may be implemented in the form of a module, a procedure, a function, and so on which performs the above-described functions or operations. Software code may be stored in a memory unit and executed by a processor. The memory unit is located at the interior or exterior of the processor and may transmit and receive data to and from the processor via various known means.

### Industrial Applicability

The present disclosure may be used in a UE, a BS, or other equipment in a wireless mobile communication system.

## Claims

1. A method of receiving a signal by a user equipment, UE, in a wireless communication system, the method comprising:
receiving, through higher layer signaling, information for enabling frequency hopping;
receiving (S1806), through a physical downlink control channel, PDCCH, downlink control information, DCI, scheduling two transport blocks, TBs, from a base station, BS;
obtaining information from the DCI based on a repetition number configured for the two TBs; and
receiving (S1808), through a physical downlink shared channel, PDSCH, the two TBs, wherein obtaining information from the DCI comprises:
processing, based on the repetition number, 2-bit information in the DCI,
i) in a case of the repetition number being 1, each bit of the 2-bit information is only related to a redundancy version, RV, and frequency hopping information is not included in the DCI; **characterized in that**
ii) in a case of the repetition number being larger than 1, a first bit of the 2-bit information is only related to a RV and a second bit of the 2-bit information is only related to the frequency hopping for the two TBs scheduled by the DCI.

2. The method according to claim 1, wherein in the case of the repetition number being 1, the frequency hopping is performed for the two transport blocks as enabled by the higher layer signaling.

3. The method according to claim 1, wherein the UE is not configured to use 64- quadrature amplitude modulation, 64QAM, for the PDSCH.

4. The method according to any one of the preceding claims, further comprising receiving configuration information for scheduling a plurality of TBs.

5. The method according to claim 4, wherein the configuration information for scheduling the plurality of TBs includes information about a maximum number of TBs schedulable by the one DCI.

6. An apparatus (100) for wireless communication, the apparatus comprising:
at least one processor (102); and
at least one memory (104) operatively coupled to the at least one processor (102), and when executed, causing the at least one processor (102) to perform operations,
wherein the operations include:
receiving, through higher layer signaling, information for enabling frequency hopping;
receiving (S1806), through a physical downlink control channel, PDCCH, downlink control information, DCI, scheduling two transport blocks, TBs, from a base station, BS;
obtaining information from the DCI based on a repetition number configured for the two TBs; and
receiving (S1808), through a physical downlink shared channel, PDSCH, the two TBs, wherein obtaining information from the DCI comprises:
processing, based on the repetition number, 2-bit information in the DCI,
i) in a case of the repetition number being 1, each bit of the 2-bit information is related to a redundancy version, RV, and frequency hopping information is not included in the DCI; **characterized in that**
ii) in a case of the repetition number being larger than 1, a first bit of the 2-bit information is only related to a RV and a second bit of the 2-bit information is only related to the frequency hopping for the two TBs scheduled by the DCI.

7. The apparatus (100) according to claim 6, further comprising:
a transceiver (106) configured to transmit or receive a wireless signal under control of the at least one processor (102).

8. The apparatus (100) according to claim 6, wherein the apparatus (100) is a user equipment, UE, configured to operate in a wireless communication system.

9. The apparatus (100) according to claim 6, wherein the apparatus (100) is an application specific integrated circuit, ASIC, or a digital signal processing device.

10. A method of transmitting a signal by a base station, BS, in a wireless communication system, the method comprising:
transmitting, through higher layer signaling, information for enabling frequency hopping;
generating downlink control information, DCI, scheduling two transport blocks, TBs, based on a repetition number configured for the two TBs;
transmitting (S1706), through a physical downlink control channel, PDCCH, the DCI to a user equipment, UE; and
transmitting (S1708), through a physical downlink shared channel, PDSCH, the two TBs, wherein generating the one DCI comprises:
determining, based on the repetition number, 2-bit information in the DCI,
i) in a case of the repetition number being 1, each bit of the 2-bit information is only related to a redundancy version, RV, and frequency hopping information is not included in the DCI; **characterized in that**
ii) in a case of the repetition number being larger than 1, a first bit of the 2-bit information is only related to a RV and a second bit of the 2-bit information is only related to the frequency hopping for the two TBs scheduled by the DCI.

11. A base station (200), BS, comprising:
at least one processor (202); and
at least one memory (204) operatively coupled to the at least one processor (202), and when executed, causing the at least one processor (202) to perform operations,
wherein the operations include:
transmitting, through higher layer signaling, information for enabling frequency hopping;
generating downlink control information, DCI, scheduling two transport blocks, TBs, based on a repetition number configured for the two TBs;
transmitting (S1706), through a physical downlink control channel, PDCCH, the one DCI to a user equipment, UE; and
transmitting (S1708), through a physical downlink shared channel, PDSCH, the two TBs, wherein generating the one DCI comprises:
determining, based on the repetition number, 2-bit information in the DCI,
i) in a case of the repetition number being 1, each bit of the 2-bit information is only related to a redundancy version, RV, and frequency hopping information is not included in the DCI; **characterized in that**
ii) in a case of the repetition number being larger than 1, a first bit of the 2-bit information is only related to a RV and a second bit of the 2-bit information is only related to the frequency hopping for the two TBs scheduled by the DCI.

12. A computer-readable storage medium storing instructions which, when executed by a processor, are configured to cause the processor to perform the method according to any one of claims 1 to 5.

## Patentansprüche

1. Verfahren zum Empfangen eines Signals durch ein Benutzergerät, UE, in einem Drahtloskommunikationssystem, wobei das Verfahren folgende Vorgänge umfasst:
Empfangen, durch Signalisierung auf höherer Ebene, von Informationen zum Ermöglichen von Frequenzspringen;
Empfangen (S1806), über einen "Physical Downlink Control Channel", PDCCH, von "Downlink Control Information", DCI, die zwei Transportblöcke, TB, planen, von einer Basisstation, BS;
Erhalten von Informationen aus den DCI auf der Grundlage einer für die zwei TBs ausgelegten Wiederholungszahl; und Empfangen (S1808), über einen "Physical Downlink Shared Channel", PDSCH, der zwei TBs,
wobei das Erhalten von Informationen aus den DCI umfasst:
Verarbeiten, auf der Grundlage der Wiederholungszahl, von 2-Bit-Informationen in den DCI,
i) wobei, wenn die Wiederholungszahl 1 ist, jedes Bit der 2-Bit-Informationen sich nur auf eine Redundanzversion, RV, bezieht und die Frequenzsprunginformationen nicht in den DCI beinhaltet sind;
**dadurch gekennzeichnet, dass**
ii) wenn die Wiederholungszahl größer als 1 ist, ein erstes Bit der 2-Bit-Informationen sich nur auf eine RV bezieht und ein zweites Bit der 2-Bit-Informationen sich nur auf das Frequenzspringen für die zwei von den DCI geplanten TBs bezieht.

2. Verfahren nach Anspruch 1, wobei, wenn die Wiederholungszahl 1 ist, das Frequenzspringen für die zwei Transportblöcke durchgeführt wird, wie durch die Signalisierung auf höherer Ebene ermöglicht.

3. Verfahren nach Anspruch 1, wobei das UE nicht zum Verwenden von 64-Quadratur-Amplitudenmodulation, 64QAM, für den PDSCH ausgelegt ist.

4. Verfahren nach einem der vorhergehenden Ansprüche, ferner umfassend das Empfangen von Auslegungsinformationen für die Planung einer Vielzahl von TBs.

5. Verfahren nach Anspruch 4, wobei die Auslegungsinformationen für die Planung der Vielzahl von TBs Informationen über eine maximale Anzahl von TBs beinhalten, die von den einen DCI geplant werden können.

6. Vorrichtung (100) für Drahtloskommunikation, wobei die Vorrichtung umfasst:
mindestens einen Prozessor (102); und
mindestens einen Speicher (104), der betriebsfähig mit dem mindestens einen Prozessor (102) gekoppelt ist und bei Ausführung den mindestens einen Prozessor (102) veranlasst, Operationen durchzuführen,
wobei die Operationen beinhalten:
Empfangen, durch Signalisierung auf höherer Ebene, von Informationen zum Ermöglichen von Frequenzspringen;
Empfangen (S1806), über einen "Physical Downlink Control Channel", PDCCH, von "Downlink Control Information", DCI, die zwei Transportblöcke, TB, planen, von einer Basisstation, BS;
Erhalten von Informationen aus den DCI auf der Grundlage einer für die zwei TBs ausgelegten Wiederholungszahl; und Empfangen (S1808), über einen "Physical Downlink Shared Channel", PDSCH, der zwei TBs,
wobei das Erhalten von Informationen aus den DCI umfasst:
Verarbeiten, auf der Grundlage der Wiederholungszahl, von 2-Bit-Informationen in den DCI,
i) wobei, wenn die Wiederholungszahl 1 ist, jedes Bit der 2-Bit-Informationen sich auf eine Redundanzversion, RV, bezieht und die Frequenzsprunginformationen nicht in den DCI beinhaltet sind;
**dadurch gekennzeichnet, dass**
ii) wenn die Wiederholungszahl größer als 1 ist, ein erstes Bit der 2-Bit-Informationen sich nur auf eine RV bezieht und ein zweites Bit der 2-Bit-Informationen sich nur auf das Frequenzspringen für die zwei von den DCI geplanten TBs bezieht.

7. Vorrichtung (100) nach Anspruch 6, ferner umfassend: einen Sender-Empfänger (106), der dafür ausgelegt ist, unter der Steuerung des mindestens einen Prozessors (102) ein Drahtlossignal zu senden oder zu empfangen.

8. Vorrichtung (100) nach Anspruch 6, wobei die Vorrichtung (100) ein Benutzergerät, UE, ist, das für den Betrieb in einem Drahtloskommunikationssystem ausgelegt ist.

9. Vorrichtung (100) nach Anspruch 6, wobei die Vorrichtung (100) eine anwendungsspezifische integrierte Schaltung, ASIC, oder eine Digitalsignalverarbeitungsvorrichtung ist.

10. Verfahren zum Senden eines Signals durch eine Basisstation, BS, in einem Drahtloskommunikationssystem, wobei das Verfahren folgende Vorgänge umfasst:
Senden, durch Signalisierung auf höherer Ebene, von Informationen zum Ermöglichen von Frequenzspringen;
Erzeugen von "Downlink Control Information", DCI, die zwei Transportblöcke, TBs, auf der Grundlage einer für die zwei TBs ausgelegten Wiederholungszahl planen;
Senden (S1706), über einen "Physical Downlink Control Channel", PDCCH, der DCI an ein Benutzergerät, UE; und
Senden (S1708), über einen "Physical Downlink Shared Channel", PDSCH, der zwei TBs,
wobei das Erzeugen der einen DCI umfasst:
Bestimmen, auf der Grundlage der Wiederholungszahl, von 2-Bit-Informationen in den DCI,
i) wobei, wenn die Wiederholungszahl 1 ist, jedes Bit der 2-Bit-Informationen sich nur auf eine Redundanzversion, RV, bezieht und die Frequenzsprunginformationen nicht in den DCI beinhaltet sind;
**dadurch gekennzeichnet, dass**
ii) wenn die Wiederholungszahl größer als 1 ist, ein erstes Bit der 2-Bit-Informationen sich nur auf eine RV bezieht und ein zweites Bit der 2-Bit-Informationen sich nur auf das Frequenzspringen für die zwei von den DCI geplanten TBs bezieht.

11. Basisstation (200), BS, umfassend:
mindestens einen Prozessor (202); und
mindestens einen Speicher (204), der betriebsfähig mit dem mindestens einen Prozessor (202) gekoppelt ist und bei Ausführung den mindestens einen Prozessor (202) veranlasst, Operationen durchzuführen,
wobei die Operationen beinhalten:
Senden, durch Signalisierung auf höherer Ebene, von Informationen zum Ermöglichen von Frequenzspringen;
Erzeugen von "Downlink Control Information", DCI, die zwei Transportblöcke, TBs, auf der Grundlage einer für die zwei TBs ausgelegten Wiederholungszahl planen;
Senden (S1706), über einen "Physical Downlink Control Channel", PDCCH, der einen DCI an ein Benutzergerät, UE; und
Senden (S1708), über einen "Physical Downlink Shared Channel", PDSCH, der zwei TBs,
wobei das Erzeugen der einen DCI umfasst:
Bestimmen, auf der Grundlage der Wiederholungszahl, von 2-Bit-Informationen in den DCI,
i) wobei, wenn die Wiederholungszahl 1 ist, jedes Bit der 2-Bit-Informationen sich nur auf eine Redundanzversion, RV, bezieht und die Frequenzsprunginformationen nicht in den DCI beinhaltet sind; **dadurch gekennzeichnet, dass**
ii) wenn die Wiederholungszahl größer als 1 ist, ein erstes Bit der 2-Bit-Informationen sich nur auf eine RV bezieht und ein zweites Bit der 2-Bit-Informationen sich nur auf das Frequenzspringen für die zwei von den DCI geplanten TBs bezieht.

12. Computerlesbares Speichermedium, auf dem Anweisungen gespeichert sind, die bei ihrer Ausführung durch einen Prozessor dafür ausgelegt sind, den Prozessor zu veranlassen, das Verfahren nach einem der Ansprüche 1 bis 5 durchzuführen.

## Revendications

1. Procédé de réception d'un signal par un équipement utilisateur, UE, dans un système de communication sans fil, le procédé comprenant les étapes suivantes :
recevoir, par l'intermédiaire d'une signalisation de couche supérieure, des informations pour permettre le saut de fréquence ;
recevoir (S1806), par l'intermédiaire d'un canal de commande de liaison descendante physique, PDCCH, des informations de commande de liaison descendante, DCI,
programmant deux blocs de transport, TB, à partir d'une station de base, BS ;
obtenir des informations à partir des DCI sur la base d'un nombre de répétitions configuré pour les deux TB ; et
recevoir (S1808), par l'intermédiaire d'un canal partagé de liaison descendante physique, PDSCH, les deux TB, où l'obtention d'informations à partir des DCI comprend :
le traitement, sur la base du nombre de répétitions, d'informations à 2 bits dans les DCI,
i) dans le cas où le nombre de répétitions est 1, chaque bit des informations à 2 bits est uniquement lié à une version de redondance, RV, et les informations de saut de fréquence ne sont pas incluses dans les DCI ;
**caractérisé en ce que** :
ii) dans le cas où le nombre de répétitions est supérieur à 1, un premier bit des informations à 2 bits est uniquement lié à une RV et un second bit des informations à 2 bits est uniquement lié au saut de fréquence pour les deux TB programmés par les DCI.

2. Procédé selon la revendication 1, dans lequel, dans le cas où le nombre de répétitions est égal à 1, le saut de fréquence est effectué pour les deux blocs de transport tel que permis par la signalisation de couche supérieure.

3. Procédé selon la revendication 1, dans lequel l'UE n'est pas configuré pour utiliser une modulation d'amplitude en quadrature 64, 64QAM, pour le PDSCH.

4. Procédé selon l'une quelconque des revendications précédentes, comprenant en outre la réception d'informations de configuration pour programmer une pluralité de TB.

5. Procédé selon la revendication 4, dans lequel les informations de configuration pour programmer la pluralité de TB comprennent des informations sur un nombre maximum de TB pouvant être programmés par les DCI.

6. Appareil (100) pour une communication sans fil, l'appareil comprenant :
au moins un processeur (102) ; et
au moins une mémoire (104) couplée de manière opérationnelle à l'au moins un processeur (102) et, lorsqu'elle est exécutée, amenant l'au moins un processeur (102) à exécuter des opérations,
où les opérations comprennent les étapes suivantes :
recevoir, par l'intermédiaire d'une signalisation de couche supérieure, des informations pour permettre le saut de fréquence ;
recevoir (S1806), par l'intermédiaire d'un canal de commande de liaison descendante physique, PDCCH, des informations de commande de liaison descendante, DCI,
programmant deux blocs de transport, TB, à partir d'une station de base, BS ;
obtenir des informations à partir des DCI sur la base d'un nombre de répétitions configuré pour les deux TB ; et
recevoir (S1808), par l'intermédiaire d'un canal physique partagé de liaison descendante, PDSCH, les deux TB,
où l'obtention d'informations à partir des DCI comprend : le traitement, sur la base du nombre de répétitions, d'informations à 2 bits dans les DCI,
i) dans le cas où le nombre de répétitions est 1, chaque bit des informations à 2 bits est lié à une version de redondance, RV, et les informations de saut de fréquence ne sont pas incluses dans les DCI ;
**caractérisé en ce que** :
ii) dans le cas où le nombre de répétitions est supérieur à 1, un premier bit des informations à 2 bits est uniquement lié à une RV et un second bit des informations à 2 bits est uniquement lié au saut de fréquence pour les deux TB programmés par les DCI.

7. Appareil (100) selon la revendication 6, comprenant en outre :
un émetteur-récepteur (106) configuré pour émettre ou recevoir un signal sans fil sous le contrôle de l'au moins un processeur (102).

8. Appareil (100) selon la revendication 6, dans lequel l'appareil (100) est un équipement utilisateur, UE, configuré pour fonctionner dans un système de communication sans fil.

9. Appareil (100) selon la revendication 6, dans lequel l'appareil (100) est un circuit intégré spécifique à une application, ASIC, ou un dispositif de traitement de signal numérique.

10. Procédé de transmission d'un signal par une station de base, BS, dans un système de communication sans fil, le procédé comprenant les étapes suivantes :
transmettre, par l'intermédiaire d'une signalisation de couche supérieure, des informations pour permettre le saut de fréquence ;
générer des informations de commande de liaison descendante, DCI, programmant deux blocs de transport, TB, sur la base d'un nombre de répétitions configuré pour les deux TB ;
transmettre (S1706), par l'intermédiaire d'un canal de commande de liaison descendante physique, PDCCH, les DCI à un équipement utilisateur, UE ; et
transmettre (S1708), par l'intermédiaire d'un canal partagé de liaison descendante physique, PDSCH, les deux TB,
où la génération des DCI comprend :
la détermination, sur la base du numéro de répétition, d'informations à 2 bits dans les DCI,
i) dans le cas où le nombre de répétitions est 1, chaque bit des informations à 2 bits est uniquement lié à une version de redondance, RV, et les informations de saut de fréquence ne sont pas incluses dans les DCI ;
**caractérisé en ce que** :
ii) dans le cas où le nombre de répétitions est supérieur à 1, un premier bit des informations à 2 bits est uniquement lié à une RV et un second bit des informations à 2 bits est uniquement lié au saut de fréquence pour les deux TB programmés par les DCI.

11. Station de base (200), BS, comprenant :
au moins un processeur (202) ; et
au moins une mémoire (204) couplée de manière opérationnelle à l'au moins un processeur (202) et, lorsqu'elle est exécutée, amène l'au moins un processeur (202) à effectuer des opérations,
où les opérations comprennent :
la transmission, par l'intermédiaire d'une signalisation de couche supérieure, d'informations pour permettre le saut de fréquence ;
la génération d'informations de commande de liaison descendante, DCI, programmant deux blocs de transport, TB, sur la base d'un nombre de répétitions configuré pour les deux TB ;
la transmission (S1706), par l'intermédiaire d'un canal de commande de liaison descendante physique, PDCCH, des DCI à un équipement utilisateur, UE ; et
la transmission (S1708), par l'intermédiaire d'un canal partagé de liaison descendante physique, PDSCH, les deux TB, où :
la génération des DCI comprend :
la détermination, sur la base du nombre de répétitions, d'informations à 2 bits dans les DCI,
i) dans le cas où le nombre de répétitions est égal à 1, chaque bit des informations à 2 bits est uniquement lié à une version de redondance, RV, et les informations de saut de fréquence ne sont pas incluses dans les DCI ;
**caractérisé en ce que** :
ii) dans le cas où le nombre de répétitions est supérieur à 1, un premier bit des informations à 2 bits est uniquement lié à une RV et un second bit des informations à 2 bits est uniquement lié au saut de fréquence pour les deux TB programmés par les DCI.

12. Support de stockage lisible par ordinateur stockant des instructions qui, lorsqu'elles sont exécutées par un processeur, sont configurées pour amener le processeur à exécuter le procédé selon l'une quelconque des revendications 1 à 5.
